# FASCICULE DE BREVET EUROPEEN

(11) **EP 3 195 183 B1**
(45) Date de publication et mention de la délivrance du brevet: **15.01.2020**
(21) Numéro de dépôt: 15747429.7
(22) Date de dépôt: 30.07.2015
(51) Int. Cl.: G06K 7/10

(54) **SYSTEME D'INTERROGATION DE TRANSPONDEURS RFID**
ABFRAGESYSTEM FÜR RFID-TRANSPONDER
RFID TRANSPONDER QUERYING SYSTEM

(30) Priorité: 01.08.2014 US 201462032056 P; 15.09.2014 FR 1458679
(43) Date de publication de la demande: 26.07.2017
(73) Titulaire: Tagsys, 13600 La Ciotat (FR)
(72) Inventeur: RECOULY, Marc, 13600 La Ciotat (FR); CATALANOTTO, Cyril, 83200 Toulon (FR); LOUSSERT, Christophe, 13090 Aix-en-Provence (FR); TALON, Michel, 13140 Miramas (FR)
(74) Mandataire: Hautier, Nicolas
(86) Numéro de dépôt international: PCT/EP2015/067580
(87) Numéro de publication internationale: WO 2016/016396

(56) Documents cités:
- JP-A- H1 166 250
- US-A1- 2011 205 025
- US-B1- 7 606 530

## Description

### DOMAINE TECHNIQUE DE L'INVENTION

La présente invention concerne le domaine de l'identification par radio fréquences (RFID) en général, et plus particulièrement un système de communication entre un lecteur/interrogateur et des transpondeurs passifs se situant trop loin du lecteur/ interrogateur pour pouvoir être énergisés correctement par celui-ci. La présente invention trouvera des applications dans de nombreux domaines comme l'inventaire de produits dans un entrepôt ou un magasin et plus particulièrement par exemple dans le domaine de la distribution.

### ÉTAT DE LA TECHNIQUE

La technologie RFID connait depuis quelques années une croissance de son champ d'application. Anciennement connue uniquement du grand public pour son utilisation pour des systèmes antivol, elle est aujourd'hui présente dans de nombreux secteurs industriels pour des questions de traçabilité et de gestion de stocks, par exemple. Un transpondeur passif est un transpondeur ne disposant pas de sa propre source d'alimentation. Son alimentation provient d'une onde électromagnétique qu'il reçoit par le biais d'une antenne et qui est ensuite convertie en source de courant pour alimenter les fonctions du transpondeur. Les protocoles de communications sont réglementés et standardisés (standard ePC UHF Gen2 et norme ISO 18000-6). Ainsi les lecteurs/interrogateurs RFID que l'on rencontre généralement fonctionnent avec des transpondeurs passifs configurés pour être alimentés et pour communiquer à une même fréquence proche de 900 MHz et plus précisément comprise entre 865,6MHz et 867,6MHz en Europe et entre 902MHz et 928MHz aux Etats-Unis.

Les avancées technologiques ont permis de réduire la taille des transpondeurs passifs de sorte à ce qu'ils peuvent être incorporés dans des éléments de petite taille, par exemple dans des éléments textile au niveau d'une simple couture par exemple, mais également apposés sur des documents. L'augmentation de l'utilisation de cette technologie dans des secteurs à forte densité de produits implique certaines contraintes. En effet, il est parfois nécessaire de recourir à une infrastructure lourde afin de pouvoir communiquer avec chacun des transpondeurs situés dans un espace de stockage. La mise en place de lecteurs/interrogateurs afin de couvrir l'ensemble d'un site peut devenir onéreuse pour peu que le site de stockage dépasse les 20 mètres carrés. Afin de réduire les coûts d'installation et d'entretien, certaines solutions ont été proposées. L'idée principale de ces solutions repose sur l'utilisation de ce qui est nommé un nœud d'énergisation ou plus souvent par son vocable anglais « Power Node ». Plusieurs types de nœud d'énergisation ont été proposés.

On connait ainsi par exemple le document US 2011/205025 A1 qui concerne des problématiques d'aveuglement d'un reader par d'autres readers.

Ou bien le document JP H11 66250 A qui concerne lui la problématique de la transmission à longue distance entre un lecteur RFID et un transpondeur RFID.

Ou encore le document US 7 606 530 B1 qui lui concerne un répéteur comprenant deux parties : l'une à l'extérieur d'un blindage électromagnétique et l'autre à l'intérieur, le répéteur ayant pour rôle de répéter les échanges entre le lecteur RFID et un TAG, chacun étant situé de part et d'autre du blindage électromagnétique.

Le brevet US 7,812,725 B2 divulgue l'utilisation de nœud d'énergisation disposés proche des transpondeurs passifs. Ces nœud disposent de leur propre source d'énergie et télé-alimentent les transpondeurs RFID dans un certain volume autour d'eux. Ce document propose un mode de fonctionnement dit « Open loop » ou circuit ouvert en français. Selon ce mode de fonctionnement d'un système comportant un lecteur, un nœud d'énergisation et un transpondeur RFID, le lecteur utilise uniquement ses fonctionnalités de lecteur et non d'interrogateur, le nœud d'énergisation télé-alimente le transpondeur RFID qui rétrodiffuse alors une réponse que le lecteur est apte à lire. Dans ces conditions, la portée de la lecture de la réponse du transpondeur RFID peut être de l'ordre de plusieurs dizaines de mètres. Sachant que la portée d'interrogation d'un lecteur standard est uniquement de l'ordre de 5 à 8 mètres.

Il existe d'autres solutions basées sur des nœuds d'énergisation disposant d'une fonction dite d'interrogateur distribué afin de générer un signal d'interrogation à la suite de la réception d'un signal de commande. Ces solutions indiquent au nœud d'énergisation d'exécuter certaines commandes et transformations sur ledit signal d'interrogation. Ainsi, le nœud d'énergisation démodule le signal de commande et génère un signal d'interrogation par le biais d'un processeur afin de pouvoir interroger le transpondeur RFID à la bonne fréquence. Le nœud d'énergisation est piloté par le lecteur/interrogateur afin de lui faire effectuer certaines actions.

Ces solutions comprennent un récepteur d'excitation pour recevoir un signal de commande provenant d'un lecteur, un émetteur d'excitation pour transmettre le signal de commande reçu en tant que signal de commande répété à un transpondeur RFID et un élément d'excitation pour transmettre le signal d'énergie en tant que signal d'excitation séparé en plus du signal de commande répété au transpondeur RFID pour stocker l'énergie dans le transpondeur RFID pour permettre l'émission du signal de rétrodiffusion par le transpondeur RFID.

Ainsi, les solutions proposées dans l'état de l'art reposent sur l'utilisation d'un dispositif radio fréquence complexe afin de télé-alimenter et de générer un signal d'interrogation permettant ainsi au lecteur/interrogateur de pouvoir communiquer avec des transpondeurs RFID éloignés du lecteur/interrogateur.

En pratique, il s'avère que ce type de solution présente les inconvénients suivants :
- un temps de latence important entre l'émission d'un signal d'interrogation par le lecteur/interrogateur et la réception par le lecteur/interrogateur de la réponse rétrodiffusée par le transpondeur;
- un coût élevé de l'installation et de l'entretien ;

Il serait utile de proposer une solution pour réduire au moins l'un de ces inconvénients.

En outre il serait utile de d'augmenter encore les performances de ces solutions, notamment en termes de distance de lecture et/ou de taux de réussite de lecture tout en conservant un coût limité.

La présente invention vise à atteindre au moins l'un des objectifs mentionnés ci-dessus.

### RÉSUMÉ DE L'INVENTION

Suivant un mode de réalisation, l'invention concerne un système de localisation de transpondeurs RFID selon la revendication 1.

La transposition de fréquence effectuée de manière analogique apporte l'avantage que le signal d'interrogation n'est pas démodulé puis régénéré ensuite. De ce fait, une transposition analogique de fréquence permet de conserver une quasi-synchronicité entre les différents signaux du système RFID. Il y a quasi-synchronicité entre les signaux d'interrogation de fréquence F0 et F1, les signaux d'interrogation répétés de fréquence F2 et les signaux de réponse rétrodiffusés de fréquence F3. Cette quasi-synchronicité des signaux permet une meilleure sensibilité du lecteur RFID de sorte que la distance maximum de lecture de la réponse rétrodiffusée d'un transpondeur RFID s'en trouve augmentée.

L'invention permet ainsi d'améliorer la performance des systèmes de lecture de transpondeurs RFID.

Par ailleurs, la transposition analogique de fréquence permet d'avoir des répéteurs particulièrement robustes et peu onéreux à fabriquer. Il est ainsi possible d'avoir un nombre de répéteurs important que l'on peut alors répartir de manière plus dense sur toute la zone à couvrir de manière à obtenir des performances élevées et tout en conservant un coût très faible pour l'installation.

L'invention permet ainsi d'augmenter la distance de communication entre des transpondeurs et un lecteur, tout en réduisant le coût de l'installation, ou tout au moins en conservant un coût limité.

Avantageusement, le répéteur fait office de nœud d'énergisation, habituellement désigné par le vocable anglais « power node ».

Par ailleurs, dans le cadre du développement de la présente invention, il s'est avéré que dans les solutions connues, le traitement du signal d'interrogation par le nœud d'énergisation, traitement qui implique un processeur et qui comprend une démodulation du signal et la génération d'un nouveau signal, est responsable d'une partie significative du temps de latence du système.

On rappellera ici que l'on entend par temps de latence la durée séparant l'émission d'un signal d'interrogation par le lecteur/interrogateur et la réception par le lecteur/interrogateur de la réponse rétrodiffusée par le transpondeur.

En prévoyant une répétition du signal d'interrogation sans démodulation de ce signal et avec une simple transposition de fréquence, l'invention permet de réduire considérablement le temps de latence.

Les performances des systèmes de lecture de transpondeurs RFID s'en trouve ainsi améliorées.

Suivant un aspect, l'invention concerne un système d'interrogation électromagnétique de transpondeurs RFID comprenant au moins un transpondeur RFID, au moins un dispositif RFID dit répéteur et au moins une borne RFID, l'au moins un répéteur est configuré pour répéter un signal d'interrogation de fréquence F1 depuis l'au moins une borne RFID et vers l'au moins un transpondeur RFID à une fréquence F2 et l'au moins un transpondeur RFID est configuré pour émettre un signal rétrodiffusé à une fréquence F3 en réponse à la réception dudit signal d'interrogation transmis par l'au moins un répéteur. Une borne RFID comprend au moins un lecteur RFID, par exemple un lecteur RFID standard, et un dispositif RFID additionnel nommé « add-on » configuré pour transposer un signal d'interrogation de fréquence F0 en un signal d'interrogation de fréquence F1 et pour émettre ledit signal d'interrogation vers l'au moins un répéteur à une fréquence F1. L'au moins un répéteur est configuré pour effectuer une transposition de fréquence depuis la fréquence F1 vers la fréquence F2.

L'utilisation d'une fréquence F1 différente d'une fréquence F2 permet d'éviter les phénomènes d'auto aveuglement inhérents aux répéteurs d'une même fréquence en entrée et amplifiée en sortie.

Suivant un aspect, l'invention concerne un système d'interrogation électromagnétique de transpondeurs RFID comprenant au moins un transpondeur RFID, au moins un dispositif RFID dit répéteur et au moins une borne RFID, l'au moins un répéteur est configuré pour répéter un signal d'interrogation de fréquence F1 depuis l'au moins une borne RFID et vers l'au moins un transpondeur RFID à une fréquence F2 et l'au moins un transpondeur RFID est configuré pour émettre un signal rétrodiffusé à une fréquence F3 en réponse à la réception dudit signal d'interrogation transmis par l'au moins un répéteur. L'au moins une borne RFID comprend au moins un lecteur RFID, typiquement un lecteur RFID standard, et un dispositif RFID additionnel nommé « add-on » configuré pour transposer un signal d'interrogation de fréquence F0 en un signal d'interrogation de fréquence F1 et pour émettre ledit signal d'interrogation à destination de l'au moins un répéteur à une fréquence F1.

Avantageusement, cela permet d'utiliser un lecteur standard et donc de réduire les coûts de développement tout en adaptant librement la fréquence de commande des répéteurs.

Selon un aspect, la présente invention concerne un répéteur pour système de localisation de transpondeurs RFID selon la revendication 1.

L'utilisation d'un répéteur permet de gagner en distance de communication avec les transpondeurs RFID, en effet, les transpondeurs RFID disposent d'une très petite antenne en comparaison de l'antenne de la borne RFID. Ainsi, la possibilité de répéter un signal d'interrogation assure une plus longue portée de la communication dans un système RFID.

De plus, la transposition analogique opérée par le répéteur assure encore un gain en distance puisque les signaux étant quasi-synchrones entre eux, la sensibilité de la borne RFID s'en trouve accrue.

Le mélange du signal de fréquence F1 avec le signal de référence est effectué de manière à ce que le signal en sortie de mélangeur soit égal à F2.

Avantageusement, le répéteur comprend au moins un transpondeur RFID additionnel et au moins une antenne additionnelle adaptée à une fréquence de service F4, le transpondeur RFID additionnel et l'antenne additionnelles sont configurés pour établir un canal de communication de service de fréquence F4 entre le répéteur et la borne RFID de sorte à permettre un l'échange de données entre le répéteur par la borne RFID , la fréquence F4 étant différente de la fréquence F1.

Disposer d'un canal de communication de service entre la borne RFID et le répéteur permet un contrôle du répéteur depuis la borne RFID, cela assure une centralisation du contrôle des répéteurs.

De manière très avantageuse, l'utilisation d'un transpondeur RFID additionnel associé au répéteur permet d'utiliser les fonctions natives d'émission de signaux d'interrogation et de réception de signaux de réponse rétrodiffusés de la borne RFID.

Avantageusement, ledit transpondeur RFID additionnel associé est configuré pour recevoir des instructions de la borne RFID et le répéteur est configuré pour effectuer au moins une action fonction de ladite instruction, ladite instruction étant prise parmi : activation du répéteur, inactivation du répéteur, vérification du niveau de charge et de cycles de la batterie, contrôle de la fréquence du signal d'interrogation répété de fréquence F2, contrôle de la puissance d'émission du signal d'interrogation répété de fréquence F2, contrôle du gain du récepteur du signal d'interrogation de fréquence F1.

Dans une configuration possible le répéteur comprend plus d'un canal d'émission du signal d'interrogation répété de fréquence F2 et par conséquent plus d'une antenne d'interrogation configurée pour émettre le signal d'interrogation répété à la fréquence F2. La borne RFID peut sélectionner un canal parmi N canaux possibles afin d'étendre la zone spatiale d'interrogation d'un seul répéteur dans le but de réduire le nombre de répéteurs installés dans un système donné pour un espace donné.

Avantageusement, un même répéteur peut couvrir ainsi une très grande surface en disposant simplement de plusieurs canaux de répétition fonctionnant à la fréquence F2.

Le contrôle par la borne RFID du rayonnement d'une antenne donnée connectée au répéteur peut permettre un balayage en deux ou trois dimensions afin de localiser des transpondeurs RFID à différents endroits de l'installation à partir d'un même répéteur celui-ci comprenant au moins deux antennes fonctionnant à la fréquence F2 d'émission du signal d'interrogation répété de fréquence F2.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
- la FIGURE 1a représente un diagramme simplifié des interactions entre des éléments d'un système de l'invention, selon un mode de réalisation ;
- la FIGURE 1b représente un diagramme détaillé des interactions entre des éléments d'un système de l'invention, selon un mode de réalisation dans lequel le lecteur est un lecteur mono-statique;
- la FIGURE 2 représente l'architecture, selon un mode de réalisation de la présente invention, d'une borne RFID avec un lecteur mono-statique ;
- la FIGURE 3 représente l'architecture, selon un mode de réalisation de la présente invention, d'un Répéteur.
- la FIGURE 4 représente un diagramme détaillé des interactions entre des éléments d'un système de l'invention, selon un mode de réalisation dans lequel le lecteur est un lecteur bi-statique.
- la FIGURE 5 représente l'architecture, selon un mode de réalisation de la présente invention, d'une borne RFID avec un lecteur bi-statique ;

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE DE L'INVENTION

Il est précisé que dans le cadre de la présente invention, le terme «TAG RFID», «Transpondeur RFID» ou leurs équivalents ont pour définition tout dispositif comportant au moins une antenne et une micro-puce électronique contenant des données, et configuré pour communiquer avec un dispositif de lecture par ondes électromagnétiques afin que ledit lecteur puisse lire lesdites données contenues dans la micro-puce électronique.

Il est précisé que dans le cadre de la présente invention, le terme «TAG RFID passif», «Transpondeur RFID passif» ou leurs équivalents ont pour définition tout transpondeur RFID étant alimenté par une onde électromagnétique, soit également décrit comme un transpondeur RFID télé-alimenté.

Il est précisé que dans le cadre de la présente invention, le terme «TAG RFID actif», «Transpondeur RFID actif» ou leurs équivalents ont pour définition tout transpondeur RFID étant alimenté par sa propre source d'énergie et/ou une source d'énergie locale, soit également décrit comme un transpondeur RFID autoalimenté.

Il est précisé que dans le cadre de la présente invention, le terme «lecteur RFID», «Interrogateur RFID» ou leurs équivalents ont pour définition un dispositif configuré pour communiquer par ondes électromagnétiques avec un ou plusieurs dispositifs RFID comme par exemple un ou plusieurs transpondeurs RFID.

Il est précisé que dans le cadre de la présente invention, le terme «lecteur RFID », «Interrogateur RFID standard» ou leurs équivalents ont pour définition un dispositif configuré pour communiquer par ondes électromagnétiques avec un ou plusieurs dispositifs RFID comme par exemple un ou plusieurs transpondeurs RFID.

Le terme «lecteur RFID standard» «Interrogateur RFID standard» ou leurs équivalents ont pour définition un lecteur RFID communiquant sur la base des protocoles de communications réglementés et standardisés (standard EPC UHF Gen2 et norme ISO 18000-6), ce type de lecteur RFID standard est trouvable aisément chez la plupart des distributeurs de lecteur RFID.

Ainsi, selon les normes EPC UHF Gen2 et norme ISO 18000-6, un «lecteur RFID standard» émet et lit des signaux dont les fréquences sont comprises entre 840MHz et 960MHz selon les zones géographiques d'utilisation du système RFID UHF. Ainsi aux USA la bande UHF attribuée aux applications UHF est comprise entre 902 et 928MHz alors qu'elle est comprise entre 866 et 868MHz en Europe. La Chine autorise les fréquences comprises entre 840 et 844MHz et le Japon les fréquences comprises entre 952MHz et 958MHz.

Il est précisé que dans le cadre de la présente invention, le terme «lecteur RFID standard mono-statique» ou ses équivalents ont pour définition un lecteur RFID standard comportant au moins un même port de communication configuré pour émettre des signaux d'interrogation électromagnétique et recevoir des signaux de réponse électromagnétique.

Il est précisé que dans le cadre de la présente invention, le terme «lecteur RFID standard bi-statique» ou ses équivalents ont pour définition un lecteur RFID standard comportant au moins deux ports de communication l'un configuré pour émettre des signaux d'interrogation électromagnétique et l'autre configuré pour recevoir des signaux de réponse électromagnétique.

Il est précisé que dans le cadre de la présente invention, le terme «signaux quasi-synchrones » ou ses équivalents ont pour définition des signaux dont les fréquences ne différent pas l'une de l'autre de plus de 500 Hz.

On rappellera que la présente invention propose une solution dans laquelle les noeuds d'énergisation sont des répéteurs ne disposant pas de processeur et qui sont configurés pour répéter les signaux interrogateurs en provenance d'un lecteur/interrogateur amélioré. La solution proposée permet notamment une diminution importante du temps de latence ainsi qu'une amélioration des performances de lecture.

Avant d'entrer dans le détail de modes de réalisation préférés notamment en référence aux figures, on énonce ci-après différentes options que peut préférentiellement mais non limitativement présenter l'invention, ces options pouvant être mises en oeuvre, soit séparément, soit suivant toute combinaison entre elles :
- Avantageusement, l'au moins un transpondeur RFID est configuré pour être alimenté par des signaux de fréquence F2. Cela permet d'utiliser des transpondeurs RFID standard lorsque la fréquence F2 est proche des 900 MHz.
- Avantageusement, ledit signal d'interrogation répété de fréquence F2 émis par l'au moins un répéteur et reçus par l'au moins un transpondeur RFID fournit suffisamment d'énergie audit transpondeur RFID pour que ce dernier émette ledit signal de réponse rétrodiffusé de fréquence F3. Cela permet de télé-alimenter des transpondeurs RFID passifs avec uniquement les signaux d'interrogation répétés par les répéteurs.
- Avantageusement, le générateur de signal de référence de l'au moins un répéteur comprend un oscillateur local de référence dont la fréquence est égale à F1-F2 et/ou F1+F2. Cela permet de disposer localement d'un signal de référence qui une fois mélangé au signal d'interrogation de fréquence F1 produit un signal d'interrogation répété de fréquence F2.
- Avantageusement, au moins un transpondeur RFID additionnel est associé à l'au moins un répéteur de sorte à permettre un pilotage de l'au moins un répéteur par l'au moins une borne RFID via un canal de communication comprenant ledit transpondeur RFID additionnel associé à l'au moins un répéteur. Cela permet d'établir un canal de communication de service entre la borne RFID et le répéteur afin de pouvoir piloter le répéteur et obtenir des informations concernant son état par exemple. L'utilisation d'un transpondeur RFID additionnel permet d'utiliser les systèmes de communication déjà présente au niveau de la borne RFID afin de communiquer sans ajout de matériel supplémentaire.
- Avantageusement, l'au moins un lecteur RFID standard de l'au moins une borne RFID est configuré pour émettre des signaux d'interrogation de fréquence F0 et l'au moins une borne RFID comprend au moins un dispositif RFID additionnel, connecté à l'au moins un lecteur RFID standard et configuré pour transposer les signaux d'interrogation de fréquence F0 émis par l'au moins un lecteur RFID standard en des signaux d'interrogation de fréquence F1 destiné à être reçus par l'au moins un répéteur. Cela permet par simple ajout de ce dispositif RFID additionnel sur tout lecteur RFID standard d'implanter la présente invention dans un système RFID déjà existant.
- Avantageusement, l'au moins un dispositif RFID additionnel est configuré pour effectuer une transposition uniquement analogique des signaux d'interrogation de fréquence F0 en des signaux d'interrogation de fréquence F1. Cela permet de communiquer avec des dispositifs RFID dont la fréquence de communication n'est pas standard.
- Avantageusement, l'au moins un lecteur RFID standard comporte au moins un port de communication commun de réception de signaux de réponse rétrodiffusé émis par l'au moins un transpondeur RFID et d'émission de signaux d'interrogation auquel l'au moins un dispositif RFID additionnel est connecté. Cela permet d'utiliser un lecteur RFID standard mono-statique.
- Avantageusement, l'au moins une borne RFID 100 comprend au moins l'un parmi les éléments suivants :
   - Un lecteur RFID standard UHF Gen2 mono-statique;
   - Un circulateur permettant d'isoler le signal de réponse rétrodiffusé par l'au moins un transpondeur RFID;
   - Un générateur de signal de référence à la fréquence F1-F0 et/ou F1+F0 qui mélangé au signal d'interrogation à la fréquence F0 produit un signal d'interrogation de fréquence F1 ;
   - Un mixeur analogique du signal d'interrogation de fréquence F0 avec le signal de référence de fréquence F1-FO et/ou F1+FO ;
   - Une antenne configurée pour transmettre le signal d'interrogation de fréquence F1 à destination de l'au moins un répéteur;
   - Un amplificateur de puissance alimentant l'antenne configuré pour émettre des signaux d'interrogation de fréquence F1 ;
   - Une antenne configurée pour recevoir le signal de réponse rétrodiffusé de fréquence F3 en provenance de l'au moins un transpondeur RFID;
   - Un amplificateur du signal de réponse rétrodiffusé de fréquence F3 ;
   - optionnellement, un système de mesure du décalage en fréquence entre le signal d'interrogation émis par l'au moins un lecteur RFID standard de fréquence F0 et le signal de réponse rétrodiffusé par l'au moins un transpondeur RFID de fréquence F3 ;
   - Une Unité de Contrôle gérant l'au moins une borne RFID.
- Optionnellement la borne comprend un canal de communication de service permettant à l'au moins une borne RFID de communiquer en émission et en réception avec l'au moins un répéteur via une antenne adaptées à la fréquence F4 de service, la fréquence F4 étant différente de la fréquence F1 ;
- Avantageusement, l'au moins une borne RFID comprend au moins l'un parmi les éléments suivants :
   - Un lecteur RFID standard UHF Gen2 Bi-statique;
   - Un générateur de signal de référence à la fréquence F1-F0 et/ou F1+F0 qui mélangé au signal d'interrogation à la fréquence F0 produit un signal d'interrogation de fréquence F1 ;
   - Un mixeur analogique du signal d'interrogation de fréquence F0 avec le signal de référence de fréquence F1-F0 et/ou F1+F0;
   - Une antenne configurée pour transmettre le signal d'interrogation de fréquence F1 à destination de l'au moins un répéteur;
   - Un amplificateur de puissance alimentant l'antenne configuré pour émettre des signaux d'interrogation de fréquence F1 ;
   - Une antenne configurée pour recevoir le signal de réponse rétrodiffusé de fréquence F3 en provenance de l'au moins un transpondeur RFID;
   - Un amplificateur du signal de réponse rétrodiffusé de fréquence F3 ;
   - optionnellement, un système de mesure du décalage en fréquence entre le signal d'interrogation émis par l'au moins un lecteur RFID standard de fréquence F0 et le signal de réponse rétrodiffusé par l'au moins un transpondeur RFID de fréquence F3 ;
   - Une Unité de Contrôle gérant l'au moins une borne RFID;
- Optionnellement la borne comprend un canal de communication de service permettant à l'au moins une borne RFID de communiquer avec l'au moins un répéteur via deux antennes adaptées à la fréquence de service, une en réception et une en émission.
- Avantageusement, et sans que cela soit nécessaire, l'oscillateur local de référence est compensé en température. Cela permet de conserver les performances de lecture du lecteur RFID standard à leur maximum car plus les fréquences F0, F2 et F3 sont proches les unes des autres est meilleure est la lecture des signaux de réponse rétrodiffusés.
- Avantageusement et optionnellement, l'au moins une borne RFID comprend un système de mesure du décalage en fréquence entre le signal d'interrogation de fréquence F0 et le signal de réponse rétrodiffusé de fréquence F3 par l'au moins un transpondeur RFID. Cela permet, via le canal de communication de service, de piloter le répéteur de sorte à diminuer ce décalage de fréquence afin de conserver les meilleures performances de lecture possibles.
- Avantageusement, l'au moins une borne RFID comprend un canal de communication de service permettant à l'au moins une borne RFID de communiquer avec l'au moins un répéteur via au moins une antenne adaptée à la fréquence de service F4. Cela permet de piloter le répéteur.
- Avantageusement, l'Unité de Contrôle de l'au moins une borne RFID est configurée pour envoyer des données de pilotage vers l'au moins un répéteur via le canal de communication de service. Cela permet de piloter le répéteur.
- Avantageusement, l'au moins un répéteur effectue uniquement une transposition de fréquence. Cela permet de disposer d'un répéteur bon marché et d'éviter les phénomènes d'auto aveuglement.
- Avantageusement, l'au moins un répéteur comprend au moins l'un parmi les éléments suivants :
   - Une antenne de réception configurée pour recevoir le signal d'interrogation de fréquence F1 émis par l'au moins une borne RFID ;
   - Au moins une antenne d'émission configurée pour émettre le signal d'interrogation répété de fréquence F2 à destination de l'au moins un transpondeur RFID ;
   - Le transpondeur RFID additionnel configuré pour recevoir et émettre les signaux de service à la fréquence F4.
   - Une Unité de Contrôle gérant les données de pilotage reçues de l'au moins une borne RFID via le canal de communication de service à la fréquence F4 et/ou en BlueTooth Low Energy ;
   - Un amplificateur à gain variable commandé par l'Unité de Contrôle ;
   - Un générateur de signal de référence à la fréquence F1-F2 et/ou F1+F2 qui mélangé au signal d'interrogation reçu à la fréquence F1 produit un signal d'interrogation répété de fréquence F2, et qui est piloté par l'unité de contrôle ;
   - Un oscillateur local de référence dont la fréquence est de même valeur que la fréquence de l'oscillateur local de référence de l'au moins une borne RFID ;
   - Un mixeur analogique du signal d'interrogation reçus de fréquence F1 avec le signal de référence de fréquence F1-F2 et/ou F1+F2 configuré pour délivrer en sortie un signal d'interrogation répété de fréquence F2 ;
   - Un amplificateur de puissance alimentant l'antenne configurée pour émettre le signal d'interrogation de fréquence F2 ;
   - Une antenne configurée pour émettre et recevoir les signaux de service à la fréquence F4 ;
   - Au moins une source d'alimentation électrique.
- Avantageusement, les fréquences F0, F2 et F3 sont égales. Cela permet de gagner en précision et performances de lecture.
- Avantageusement, les fréquences F0, F2, F3 et F4 sont égales. Cela permet de gagner en précision et performances de lecture.
- Avantageusement, lesdits signaux de fréquences F0, F2 et F3 sont quasi-synchrones, c'est-à-dire que l'écart de fréquence les fréquences F0, F2 et F3 est inférieur à 500 Hz. Cela permet de gagner en précision et performances de lecture.
- Avantageusement, un seul signal est émis par l'au moins un répéteur à destination de l'au moins un transpondeur RFID à une fréquence F2. Cela permet de télé-alimenter le transpondeur RFID avec le signal d'interrogation répété de fréquence F2.
- Avantageusement, ledit signal d'interrogation répété émis par l'au moins un répéteur à une fréquence F2 comprend une porteuse servant à alimenter en énergie l'au moins un transpondeur RFID et une modulation d'amplitude de ladite porteuse, ladite modulation d'amplitude servant à répéter ledit signal d'interrogation émis par l'au moins une borne RFID de fréquence F1. Cela permet de télé-alimenter le transpondeur RFID avec le signal d'interrogation répété de fréquence F2.
- Avantageusement, la fréquence F1 est comprise préférentiellement entre 2,446GHz et 2,454GHz en Europe, avantageusement entre 2,4GHz et 2,4835GHz aux Etats-Unis et de préférence est égale à 2.45 GHz.
- Avantageusement, la fréquence F2 est comprise entre 866 MHz et 867 MHz en Europe et entre 902 MHz et 928 MHz aux Etats-Unis.
- Avantageusement, la fréquence F0 est comprise entre 866 MHz et 867 MHz en Europe et entre 902 MHz et 928 MHz aux Etats-Unis.
- Avantageusement, au moins un transpondeur RFID additionnel est associé au répéteur et assure un canal de communication de service entre le répéteur et l'au moins une borne RFID. L'utilisation d'un transpondeur RFID additionnel permet d'utiliser les systèmes de communication déjà présente au niveau de la borne RFID afin de communiquer sans ajout de matériel supplémentaire.
- Avantageusement, le canal de communication de service permettant à l'au moins une borne RFID de communiquer avec l'au moins un répéteur comprend au moins une antenne adaptée à la fréquence de service F4.
- Avantageusement, la borne RFID est configurée de manière à ce que : le signal d'interrogation de fréquence F0 émis par le lecteur RFID standard mono-statique, transite via un circulateur de haute isolation, passe ensuite au travers d'un coupleur directif de recherche de la fréquence F1, est ensuite mélangé au niveau d'un mixeur analogique avec le signal de référence de fréquence F1-F0 et/ou F1+F0 de sorte qu'en sortie de ce mixeur, ledit signal d'interrogation a pour fréquence la fréquence F1, il est alors amplifié puis émis par la borne RFID à destination d'au moins un répéteur.
- Avantageusement, la borne RFID est configurée de manière à ce que : le signal de réponse rétrodiffusé de fréquence F3 reçu par la borne RFID, est d'abord amplifié puis transite via un coupleur directif de recherche de la fréquence F3 avant de passer au travers d'un circulateur de haute isolation de sorte à être séparé des signaux d'interrogation émis par le lecteur RFID standard.
- Avantageusement, la borne RFID est configurée de manière à ce que : le signal d'interrogation de fréquence F0 émis par le lecteur RFID standard bi-statique, passe au travers d'un coupleur directif de recherche de la fréquence F1, est ensuite mélangé au niveau d'un mixeur analogique avec le signal de référence de fréquence F1-FO et/ou F1+FO de sorte qu'en sortie de ce mixeur, ledit signal d'interrogation a pour fréquence la fréquence F1, il est alors amplifié puis émis par la borne RFID à destination d'au moins un répéteur.
- Avantageusement, la borne RFID est configurée de manière à ce que : le signal de réponse rétrodiffusé de fréquence F3 reçu par la borne RFID, est d'abord amplifié et transite ensuite via un coupleur directif de recherche de la fréquence F3.
- Avantageusement, le générateur de signal de référence de l'au moins un répéteur comprend un oscillateur local de référence et le oscillateur local de référence de l'au moins un répéteur est compensée en température de manière à ce que sa fréquence soit de même valeur que la fréquence du signal de référence de l'au moins une borne RFID.
- Avantageusement, au moins un transpondeur RFID additionnel est associé au répéteur et assure un canal de communication de service entre le répéteur et l'au moins une borne RFID. Cela permet une communication entre la borne RFID et le répéteur.
- Avantageusement, ledit transpondeur RFID additionnel est configuré pour recevoir des instructions contenues dans les données de pilotage de la borne RFID et le répéteur est configuré pour effectuer au moins une action fonction de ladite instruction, ladite instruction étant prise parmi : activation du répéteur, inactivation du répéteur, vérification du niveau de charge et de cycles de d'au moins une source d'alimentation électrique du répéteur, contrôle de la fréquence du signal d'interrogation répété de fréquence F2, contrôle de la puissance d'émission du signal d'interrogation répété de fréquence F2, contrôle du gain du récepteur du signal d'interrogation de fréquence F1. Cela permet un contrôle du répéteur par la borne RFID.
- Avantageusement, le répéteur dispose de N>1 canaux d'interrogation configurés pour répéter des signaux d'interrogation de fréquence F2, chaque canal étant connecté à une antenne distincte. Cela permet d'étendre l'espace d'action d'un seul répéteur.
- Avantageusement, ledit transpondeur RFID est configuré pour recevoir des instructions contenues dans les données de pilotage de la borne RFID et le répéteur est configuré pour effectuer au moins une action fonction de ladite instruction, ladite instruction étant l'activation d'un canal d'interrogation à la fréquence F2 parmi N disponibles du répéteur. Cela permet de décider quelle zone de l'espace couvert par le répéteur, la borne RFID veut interroger.
- Avantageusement, le répéteur dispose d'au moins une antenne d'interrogation à la fréquence F2 dont le rayonnement est contrôlé par l'au moins une borne RFID permettant une localisation par balayage de l'espace d'interrogation de l'au moins un transpondeur RFID. Cela permet une localisation des transpondeurs.
- Avantageusement, la différence de fréquence entre les fréquences F0 et F2, entre les fréquences F0 et F3 et entre les fréquences F2 et F3 est inférieure à 1000 Hz, avantageusement à 500 Hz. Cela permet de gagner en précision et performances de lecture.
- Avantageusement, l'au moins un dispositif RFID additionnel effectue uniquement une transposition de fréquence. Cela permet de communiquer avec des dispositifs RFID de fréquences éloignées de 900 MHz.
- Avantageusement, l'au moins un dispositif RFID additionnel comprend au moins l'un parmi les éléments suivants :
   - Un générateur de signal de référence à la fréquence F1-F0 et/ou F1+F0 qui mélangé au signal d'interrogation à la fréquence F0 produit un signal d'interrogation de fréquence F1 ;
   - Un générateur de signal de référence à la fréquence F3-F0 et/ou F3+F0 qui mélangé au signal de réponse rétrodiffusé à la fréquence F3 produit un signal de réponse à la fréquence F0 ;
   - Un mixeur analogique du signal d'interrogation de fréquence F0 avec le signal de référence de fréquence F1-FO et/ou F1+FO ;
   - Un mixeur analogique du signal de réponse rétrodiffusé de fréquence F3 avec le signal de référence de fréquence F3-F0 et/ou F3+F0 ;
   - Une antenne configurée pour transmettre le signal d'interrogation de fréquence F1 à destination de l'au moins un répéteur ;
   - Un amplificateur de puissance alimentant l'antenne configuré pour émettre des signaux d'interrogation de fréquence F1;
   - Une antenne configurée pour recevoir le signal de réponse rétrodiffusé de fréquence F3 en provenance de l'au moins un transpondeur RFID ;
   - Un amplificateur du signal de réponse rétrodiffusé de fréquence F3 ;
   - optionnellement, un système de mesure du décalage en fréquence entre le signal d'interrogation émis par l'au moins un lecteur RFID de fréquence F0 et le signal de réponse rétrodiffusé par l'au moins un transpondeur RFID de fréquence F3 ;
   - Une Unité de Contrôle gérant l'au moins une borne RFID.
   - Un canal de communication de service permettant à l'au moins une borne RFID de communiquer en émission et en réception avec l'au moins un répéteur via une antenne adaptées à la fréquence F4 de service, la fréquence F4 étant différente de la fréquence F1.
- Avantageusement, le générateur de signal de référence de l'au moins un dispositif RFID additionnel comprend un oscillateur local de référence et l'oscillateur local de référence de l'au moins un dispositif RFID additionnel est compensée en température de manière à ce que sa fréquence soit de même valeur que la fréquence du signal de référence de l'au moins un répéteur. Cela permet au répéteur de pouvoir répéter le signal à destination du transpondeur de manière analogique. Cela permet de conserver la quasi-synchronicité entre certains signaux.
- Avantageusement, l'au moins un lecteur RFID comporte au moins un port de communication commun de réception de signaux de réponse rétrodiffusé émis par l'au moins un transpondeur RFID et d'émission de signaux d'interrogation auquel l'au moins un dispositif RFID additionnel est connecté. Cela permet d'utiliser le dispositif RFID additionnel avec un lecteur RFID mono-statique.
- Avantageusement, ledit signal d'interrogation émis par l'au moins un dispositif RFID additionnel à une fréquence F1 comprend une modulation d'amplitude d'une porteuse, ladite modulation d'amplitude servant à transmettre ledit signal d'interrogation émis par l'au moins un lecteur RFID de fréquence F0. Cela permet de transmettre un signal d'interrogation via la modulation d'amplitude à destination de l'au moins un répéteur.
- Avantageusement, le dispositif RFID additionnel est configuré pour effectuer une transposition de fréquence d'un signal de fréquence F0 en un signal de fréquence F1 et cela indépendamment du type de modulation du signal de fréquence F0. Cela permet d'opérer la transposition de fréquence sur n'importe quel type de signal modulé.
- Avantageusement, un seul signal est émis par l'au moins un dispositif RFID additionnel à destination de l'au moins un répéteur à une fréquence F1. Le répéteur n'a pas besoin d'être alimenté, il dispose de sa propre source d'alimentation. Cela permet de diminuer la puissance d'émission de la borne RFID et son temps d'émission.
- Avantageusement, les fréquences F0 et F1 sont différentes.
- Avantageusement, le générateur de signal de référence de l'au moins un dispositif RFID additionnel comprend un oscillateur local de référence dont la fréquence est égale à F1-F0 et/ou F1+F0. Cela permet de réaliser la transposition de la fréquence F0 vers la fréquence F1 de manière analogique par mélange d'un signal de référence de fréquence F1-F0 et/ou F1+F0 avec le signal d'interrogation de fréquence F0. Cela permet d'assurer la quasi-synchronicité entre le signal d'interrogation de fréquence F0 et le signal d'interrogation de fréquence F1.
- Avantageusement, la borne RFID est configurée de manière à ce que : le signal d'interrogation de fréquence F0 émis par le lecteur RFID, transite au travers d'un coupleur directif de recherche de la fréquence F1, est ensuite mélangé au niveau d'un mixeur analogique avec le signal de référence de fréquence F1-F0 et/ou F1+F0 de sorte qu'en sortie de ce mixeur, ledit signal d'interrogation a pour fréquence la fréquence F1, il est alors amplifié puis émis par la borne RFID à destination d'au moins un répéteur.
- Avantageusement, la borne RFID est configurée de manière à ce que : le signal de réponse rétrodiffusé de fréquence F3 reçu par la borne RFID, transite via un coupleur directif de recherche de la fréquence F3 avant de passer au travers d'un circulateur de haute isolation de sorte à être séparé des signaux d'interrogation émis par le lecteur RFID.
- Avantageusement, la fréquence F0 est comprise entre 866 MHz et 867 MHz en Europe et entre 902 MHz et 928 MHz aux Etats-Unis et la fréquence F1 est comprise préférentiellement entre 2,446GHz et 2,454GHz en Europe, avantageusement entre 2,4GHz et 2,4835GHz aux Etats-Unis et de préférence est égale à 2.45 GHz.
- Avantageusement, le dispositif RFID additionnel est connecté de manière filaire à l'au moins lecteur RFID.
- Avantageusement, le répéteur comprend au moins un transpondeur RFID additionnel et au moins une antenne additionnelle adaptée à une fréquence de service F4, le transpondeur RFID additionnel et l'antenne additionnelles sont configurés pour établir un canal de communication de service de fréquence F4 entre le répéteur et l'au moins une borne RFID de sorte à permettre un pilotage de l'au moins un répéteur par l'au moins une borne RFID, la fréquence F4 étant différente de la fréquence F1, et les données de pilotage comprennent au moins une instruction prise parmi : activation du répéteur, inactivation du répéteur, vérification du niveau de charge et de cycles d'au moins une source d'alimentation électrique du répéteur, contrôle de la fréquence du signal d'interrogation répété de fréquence F2, contrôle de la puissance d'émission du signal d'interrogation répété de fréquence F2, contrôle du gain du récepteur du signal d'interrogation de fréquence F1.
- Avantageusement, le répéteur comprend les éléments suivants :
   - Une antenne de réception configurée pour recevoir ledit signal d'interrogation de fréquence F1 émis par l'au moins une borne RFID ;
   - Au moins une antenne d'émission configurée pour émettre le signal d'interrogation répété de fréquence F2 à destination de l'au moins un transpondeur RFID ;
   - Ledit générateur de signal de référence à la fréquence F1-F2 et/ou F1 +F2;
   - Un mixeur analogique dudit signal d'interrogation reçu de fréquence F1 avec ledit signal de référence de fréquence F1-F2 et/ou F1+F2 configuré pour délivrer en sortie un signal d'interrogation répété de fréquence F2 ;
   - Une Unité de Contrôle gérant lesdites données de pilotage reçues de l'au moins une borne RFID via ledit canal de communication de service à la fréquence F4;
   - Le transpondeur RFID additionnel configuré pour recevoir et émettre les signaux de service à la fréquence F4.
   - L'antenne additionnelle configurée pour émettre et recevoir les signaux de service à la fréquence F4.
- Avantageusement, le répéteur dispose de N>1 canaux d'interrogation configurés pour transmettre le signal d'interrogation répété de fréquence F2, chaque canal comprenant une antenne distincte, chaque antenne étant configurée pour émettre un signal d'interrogation répété à la fréquence F2.
- Avantageusement, le transpondeur RFID additionnel associé est configuré pour recevoir des instructions contenues dans les données de pilotage de la borne RFID et le répéteur est configuré pour effectuer au moins une action fonction de ladite instruction, ladite instruction étant l'activation d'un canal d'interrogation à la fréquence F2 parmi les N canaux disponibles du répéteur.
- Avantageusement, le rayonnement de l'au moins une antenne d'interrogation à la fréquence F2 est contrôlé, par l'au moins une borne RFID via le canal de communication de service à la fréquence F4, permettant une localisation par balayage de l'espace d'interrogation de l'au moins un transpondeur RFID.
- Avantageusement, la fréquence F1 est comprise préférentiellement entre 2,446GHz et 2,454GHz, avantageusement entre 2,4GHz et 2,4835GHz et de préférence est égale à 2.45 GHz, la fréquence F2 est comprise entre 866 MHz et 867 MHz ou entre 902 MHz et 928 MHz, la fréquence F0 est comprise entre 866 MHz et 867 MHz ou entre 902 MHz et 928 MHz, la fréquence F3 est comprise entre 866 MHz et 867 MHz ou entre 902 MHz et 928 MHz et la fréquence F4 est comprise entre 866 MHz et 867 MHz ou entre 902 MHz et 928 MHz.
- Avantageusement, le lecteur RFID est un lecteur RFID UHF Gen2 Bi-statique et l'au moins une borne RFID comprend les éléments suivants :
   - Un générateur de signal de référence à la fréquence F1-F0 et/ou F1+F0 qui mélangé au signal d'interrogation à la fréquence F0 produit un signal d'interrogation de fréquence F1 ;
   - Un mixeur analogique du signal d'interrogation de fréquence F0 avec le signal de référence de fréquence F1-F0 et/ou F1+F0 ;
   - Une antenne configurée pour transmettre le signal d'interrogation de fréquence F1 à destination de l'au moins un répéteur ;
   - Une antenne configurée pour recevoir le signal de réponse de fréquence F3 en provenance de l'au moins un transpondeur RFID ;
   - Un système de mesure du décalage en fréquence entre le signal d'interrogation émis par l'au moins un lecteur RFID de fréquence F0 et le signal de réponse rétrodiffusé par l'au moins un transpondeur RFID de fréquence F3 ;
   - Un canal de communication de service permettant à l'au moins une borne RFID de communiquer avec l'au moins un répéteur en émission via une première antenne adaptée à une fréquence F4 de service et en réception via une deuxième antenne adaptée à une fréquence F4.
- Avantageusement, lecteur RFID est un lecteur RFID UHF Gen2 mono-statique et l'au moins une borne RFID comprend les éléments suivants :
   - Un circulateur permettant d'isoler le signal de réponse rétrodiffusé par l'au moins un transpondeur RFID ;
   - Un générateur de signal de référence à la fréquence F1-F0 et/ou F1+F0 qui mélangé au signal d'interrogation à la fréquence F0 produit un signal d'interrogation de fréquence F1 ;
   - Un mixeur analogique du signal d'interrogation de fréquence F0 avec le signal de référence de fréquence F1-F0 et/ou F1+F0 ;
   - Une antenne configurée pour transmettre le signal d'interrogation de fréquence F1 à destination de l'au moins un répéteur ;
   - Une antenne configurée pour recevoir le signal de réponse de fréquence F3 en provenance de l'au moins un transpondeur RFID ;
   - Un système de mesure du décalage en fréquence entre le signal d'interrogation émis par l'au moins un lecteur RFID de fréquence F0 et le signal de réponse rétrodiffusé par l'au moins un transpondeur RFID de fréquence F3 ;
   - Un canal de communication de service permettant à l'au moins une borne RFID de communiquer en émission et en réception avec l'au moins un répéteur via une antenne adaptées à une fréquence F4 de service.
- Avantageusement, le générateur de signal de référence de l'au moins un répéteur comprend un oscillateur local de référence dont la fréquence est égale à F1-F2 et/ou F1+F2 de manière à fournir ledit signal d'interrogation répété de fréquence F2.
- Avantageusement, le répéteur effectue uniquement : une amplification du signal d'interrogation de fréquence F1, une transposition depuis la fréquence F1 du signal d'interrogation amplifié vers la fréquence F2 ; une amplification du signal d'interrogation répété de fréquence F2; une réception et une exécution de données de pilotage reçues de la borne RFID.
- Avantageusement, le dispositif RFID additionnel comprend les éléments suivants :
   - Un générateur de signal de référence à la fréquence F1-F0 et/ou F1+F0 qui mélangé au signal d'interrogation à la fréquence F0 produit un signal d'interrogation de fréquence F1 ;
   - Un mixeur analogique du signal d'interrogation de fréquence F0 avec le signal de référence de fréquence F1-F0 et/ou F1+F0 ;
   - Une antenne configurée pour transmettre le signal d'interrogation de fréquence F1 à destination de l'au moins un répéteur ;
   - Un amplificateur du signal de réponse de fréquence F3 ;
   - Un système de mesure du décalage en fréquence entre le signal d'interrogation émis par l'au moins un lecteur RFID de fréquence F0 et le signal de réponse rétrodiffusé par l'au moins un transpondeur RFID de fréquence F3 ;
- Avantageusement, la borne RFID est configurée de manière à ce que : le signal d'interrogation de fréquence F0 émis par le lecteur RFID, transite au travers d'un coupleur directif de recherche de la fréquence F1, est ensuite mélangé au niveau d'un mixeur analogique avec le signal de référence de fréquence F1-F0 et/ou F1+F0 de sorte qu'en sortie de ce mixeur, ledit signal d'interrogation a pour fréquence la fréquence F1, il est alors amplifié puis émis par la borne RFID à destination d'au moins un répéteur, et le signal de réponse rétrodiffusé de fréquence F3 reçu par la borne RFID, transite via un coupleur directif de recherche de la fréquence F3 avant de passer au travers d'un circulateur de haute isolation de sorte à être séparé des signaux d'interrogation émis par le lecteur RFID.
- Avantageusement, la fréquence F1 est comprise préférentiellement entre 2,446GHz et 2,454GHz, avantageusement entre 2,4GHz et 2,4835GHz et de préférence est égale à 2.45 GHz, la fréquence F2 est comprise entre 866 MHz et 867 MHz ou entre 902 MHz et 928 MHz, la fréquence F0 est comprise entre 866 MHz et 867 MHz ou entre 902 MHz et 928 MHz et la fréquence F3 est comprise entre 866 MHz et 867 MHz ou entre 902 MHz et 928 MHz.
- Avantageusement, le lecteur RFID est un lecteur RFID UHF Gen2 Bi-statique et l'au moins une borne RFID comprend les éléments suivants :
   - Un générateur de signal de référence à la fréquence F1-F0 et/ou F1+FO qui mélangé au signal d'interrogation à la fréquence F0 produit un signal d'interrogation de fréquence F1 ;
   - Un mixeur analogique du signal d'interrogation de fréquence F0 avec le signal de référence de fréquence F1-F0 et/ou F1+F0 ;
   - Une antenne configurée pour transmettre le signal d'interrogation de fréquence F1 à destination de l'au moins un répéteur ;
   - Une antenne configurée pour recevoir le signal de réponse de fréquence F3 en provenance de l'au moins un transpondeur RFID ;
   - Un système de mesure du décalage en fréquence entre le signal d'interrogation émis par l'au moins un lecteur RFID de fréquence F0 et le signal de réponse rétrodiffusé par l'au moins un transpondeur RFID (300) de fréquence F3 ;
- Avantageusement, le lecteur RFID est un lecteur RFID UHF Gen2 mono-statique et l'au moins une borne RFID comprend les éléments suivants :
   - Un circulateur permettant d'isoler le signal de réponse rétrodiffusé par l'au moins un transpondeur RFID ;
   - Un générateur de signal de référence à la fréquence F1-F0 et/ou F1+F0 qui mélangé au signal d'interrogation à la fréquence F0 produit un signal d'interrogation de fréquence F1 ;
   - Un mixeur analogique du signal d'interrogation de fréquence F0 avec le signal de référence de fréquence F1-F0 et/ou F1+F0 ;
   - Une antenne configurée pour transmettre le signal d'interrogation de fréquence F1 à destination de l'au moins un répéteur ;
   - Une antenne configurée pour recevoir le signal de réponse de fréquence F3 en provenance de l'au moins un transpondeur RFID ;
   - Un système de mesure du décalage en fréquence entre le signal d'interrogation émis par l'au moins un lecteur RFID de fréquence F0 et le signal de réponse rétrodiffusé par l'au moins un transpondeur RFID de fréquence F3 ;
- Avantageusement, l'au moins un répéteur comprend les éléments suivants :
   - Une antenne de réception configurée pour recevoir ledit signal d'interrogation de fréquence F1 émis par l'au moins une borne RFID ;
   - Au moins une antenne d'émission configurée pour émettre le signal d'interrogation répété de fréquence F2 à destination de l'au moins un transpondeur RFID ;
   - ledit générateur de signal de référence à la fréquence F1-F2 et/ou F1 +F2;
   - Un mixeur analogique dudit signal d'interrogation reçu de fréquence F1 avec ledit signal de référence de fréquence F1-F2 et/ou F1+F2 configuré pour délivrer en sortie un signal d'interrogation répété de fréquence F2 ;
- Avantageusement, l'au moins un dispositif additionnel comprend un générateur de signal de référence et la transposition uniquement analogique de fréquence comprend un mélange dudit signal d'interrogation de fréquence F0 avec un signal de référence généré par ledit générateur de signal de référence à une fréquence F1-F0 et/ou F1+F0 de manière à fournir ledit signal d'interrogation de fréquence F1.
- Avantageusement, l'au moins un dispositif RFID additionnel effectue uniquement : une transposition depuis la fréquence F0 du signal d'interrogation vers la fréquence F1 ; une amplification du signal d'interrogation de fréquence F1, une amplification du signal de réponse rétrodiffusé de fréquence F3.

Dans un système RFID, le lecteur RFID standard transmet au transpondeur RFID une porteuse modulée en amplitude. Le transpondeur RFID étant passif, ce dernier ne fait que réfléchir l'onde incidente provenant du lecteur sans en modifier la fréquence. Cette onde incidente énergise le circuit du transpondeur RFID de manière à permettre une lecture de sa mémoire. Ces données sont alors retransmises dans la modulation de l'onde rétrodiffusée.

En conséquence de quoi le lecteur RFID standard récupère l'onde rétrodiffusée par le transpondeur RFID qui a avantageusement exactement la même fréquence mais avec une modulation d'amplitude contenant des informations du transpondeur RFID, notamment son contenu mémoire.

Le lecteur RFID standard effectue une démodulation synchrone en multipliant le signal reçu par réflexion du transpondeur RFID à l'oscillateur local. Les deux signaux ayant la même fréquence, la transposition en bande de base par cette multiplication ainsi qu'un filtrage passe bas permet de ne récupérer que l'information modulée par le transpondeur RFID sans la porteuse.

Dès lors que l'on souhaite interposer tout élément RFID entre le signal d'interrogation du lecteur RFID standard et le transpondeur RFID, il peut y avoir une perte des performances de lecture du lecteur RFID, cela provient du décalage en fréquence pouvant s'opérer lorsqu'un élément additionnel intervient entre le signal d'interrogation du lecteur RFID standard et le transpondeur RFID.

Afin de bénéficier des meilleures performances du lecteur RFID, il est important que la fréquence du signal d'interrogation du lecteur RFID standard et la fréquence du signal de réponse rétrodiffusé du transpondeur RFID soit les plus proches possibles. En effet, cette différence de fréquence ne doit pas dépasser 1kHz sur une porteuse à une fréquence comprise entre 866 MHz et 867 MHz en Europe et entre 902 MHz et 928 MHz aux Etats-Unis. Il n'est pas nécessaire d'être parfaitement à la même fréquence mais à 1 ppm (parties par million) près, ce qui est largement suffisant pour un système RFID.

Il existe deux modes de fonctionnement pour un système RFID, le mode « Open Loop » et le mode « Closed Loop ».

Selon le mode « Open Loop », le lecteur RFID standard ne sert que de lecteur, il n'interroge pas les transpondeurs RFID. De ce fait dans un mode « Open Loop », les transpondeurs sont uniquement énergisés, que cela soit par le lecteur lui-même ou par tout autre dispositif RFID de type Power Node par exemple. Ainsi aucune commande n'est envoyée aux transpondeurs RFID, seul un signal d'énergisation leur parvient. Les transpondeurs RFID ne font donc qu'émettre un signal rétrodiffusé. Le lecteur reçoit alors ce signal rétrodiffusé.

Selon le mode « Closed Loop », le lecteur RFID standard émet un signal d'interrogation à destination des transpondeurs RFID. Ce signal peut être relayé et/ou répété par un ou plusieurs dispositifs RFID de sorte à parvenir aux transpondeurs RFID. Ce signal d'interrogation comprend une série d'instructions qui sont ensuite exécutées par les transpondeurs RFID. En réponse à ce signal d'interrogation, les transpondeurs RFID émettent alors un signal de réponse rétrodiffusé à destination du lecteur RFID. Ce signal de réponse rétrodiffusé peut être relayé et/ou répété par des dispositifs RFID. Selon ce mode de fonctionnement, les transpondeurs reçoivent un signal d'interrogation et non seulement un signal d'énergisation. Ce mode permet alors de communiquer avec les transpondeurs selon leur configuration interne, le lecteur interroge et les transpondeurs répondent.

Selon un mode de réalisation, la présente invention comprend l'utilisation d'un élément RFID dit « add-on » ou dispositif RFID additionnel connecté de manière filaire et/ou non filaire à un lecteur RFID standard. L'union du lecteur RFID standard et du dispositif RFID additionnel est nommé borne RFID. Ce dispositif RFID additionnel assure une transposition de la fréquence F0 du signal interrogateur émis par le lecteur RFID standard vers une fréquence F1 autorisée sans licence comme par exemple la bande ISM 2.45 GHz. De préférence la fréquence F0 est comprise entre 866 MHz et 867 MHz en Europe et entre 902 MHz et 928 MHz aux Etats-Unis. Ensuite le signal interrogateur de fréquence F1 est transmis à un dispositif RFID dit répéteur. Le répéteur a pour unique fonction de répéter le signal interrogateur en provenance de la borne RFID vers un ou plusieurs transpondeurs RFID après avoir opéré une transposition analogique de fréquence du signal interrogateur, ainsi le signal interrogateur est reçu par le répéteur à une fréquence F1 et il est répété à un ou plusieurs transpondeurs RFID à une fréquence F2. Suite à la réception de ce signal interrogateur répété de fréquence F2, les transpondeurs sont configurés pour émettre une réponse rétrodiffusée à une fréquence F3, avantageusement, F3 est égale à F2. Ce signal de réponse rétrodiffusé de fréquence F3 est alors reçu par la borne RFID. Avantageusement, la fréquence F3 est égale à la fréquence F0. S'ensuit alors une étape de démodulation comme précisé précédemment.

Toutefois, du fait de la transposition analogique en fréquence depuis la fréquence F1 vers la fréquence F2, le répéteur comprend un générateur de signal de référence comprenant un oscillateur local de référence, avantageusement compensé en température. Celui-ci étant différent de celui que comprend le lecteur RFID standard, un décalage en fréquence peut apparaître. Comme introduit précédemment ce décalage en fréquence peut causer une perte des performances de lecture. Afin de corriger cela un canal de communication de service est mis en place entre la borne RFID et le répéteur. Ce canal de communication de service permet, entre autre, un ajustement de l'oscillateur local de référence du répéteur afin de réduire le décalage en fréquence entre la fréquence F3 et la fréquence F0, lorsque la fréquence F3 est égale à la fréquence F2. Ce canal de communication de service est assuré par une liaison filaire et/ou non filaire de type Bluetooth par exemple et/ou bien RFID et/ou bien tout autre système de communication. Avantageusement dans le cas d'une communication RFID entre la borne RFID et le répéteur, la fréquence F4 de communication est égale à la fréquence F0.

Selon un mode de réalisation de la présente invention, les fréquences F2 et F0 ne diffèrent pas de plus de 500Hz, faisant des signaux d'interrogation de fréquence F0 et des signaux d'interrogation de fréquence F2, des signaux quasi-synchrones. A cette fin des oscillateurs locaux à haute stabilité et compensés en température sont embarqués dans les répéteurs et les fréquences sont surveillées et ajustées via le canal de communication de service à intervalle de temps régulier afin de compenser toute dérive dans le temps. La mesure est effectuée au niveau de la borne RFID en mesurant la différence de fréquence entre le signal UHF émis par le lecteur RFID standard à la fréquence F0 et celui reçu à la fréquence F3 des transpondeurs RFID donc du répéteur en fonction lorsque la fréquence F2 est égale à la fréquence F3. Selon la différence mesurée une valeur de correction est envoyée au répéteur via le canal de communication de service. L'extraction des deux fréquences s'effectue par exemple à l'aide de coupleurs directifs à très faible pertes d'insertion.

Selon un mode de réalisation avantageux, les signaux d'interrogation de fréquence F0, les signaux d'interrogation répétés de fréquence F2 et les signaux de réponse rétrodiffusé de fréquence F3 sont quasi-synchrone, c'est-à-dire que la différence de fréquence, entre les fréquences F0 et F2, entre les fréquences F0 et F3 et entre les fréquences F2 et F3, est inférieure à 500 Hz.

Ainsi la présente invention comprend un système RFID pouvant fonctionner en Closed loop avec des transpondeurs RFID se trouvant à des distances qui ne permettraient pas de recevoir le signal d'interrogation sans avoir recours aux répéteurs. Avantageusement, la présente invention permet d'interroger des transpondeurs RFID situés à une distance de 30 mètres de la borne RFID en conditions de propagation en champ libre.

Tout se passe comme si le lecteur RFID standard communique directement avec les transpondeurs RFID. Le dispositif RFID additionnel et le réseau de répéteurs, par leur simplicité, restent transparents aux opérations normales d'interrogation des transpondeurs RFID par le lecteur RFID standard. Le circuit de transposition du signal interrogateur F0 vers F1, sa propagation d'une antenne d'émission à une fréquence F1 de la borne RFID vers l'antenne de réception du répéteur distante de 10 à 30 mètres puis sa transposition par un simple mixeur à une fréquence F2 puis amplification pour être rayonnée localement vers les transpondeurs RFID autour du répéteur n'allongent le temps de trajet que de moins de la micro seconde (10⁻⁶ seconde).

Lorsque qu'un dispositif reçoit suivant une antenne de réception un signal de fréquence F et émet suivant une antenne d'émission ce même signal à la même fréquence F après amplification, il peut se produire un phénomène dit d'auto-aveuglement. Ce phénomène consiste en la réception par l'antenne de réception du signal amplifié émis par l'antenne d'émission. En effet, les fréquences étant identiques, l'antenne d'émission est configurée pour recevoir un signal à la fréquence F, de ce fait le signal amplifié de fréquence F émis par l'antenne d'émission peut être reçu par l'antenne de réception. Dans cette situation, la réception du dispositif est perturbée fortement par l'émission du signal amplifié provenant de ce même dispositif. Ce phénomène est similaire à l'effet Larsen bien connu dans le domaine acoustique. Pour éviter ce type de problème, il est nécessaire de recourir à une forte isolation entre l'antenne de réception et l'antenne d'émission en diminuant fortement le gain d'amplification du signal par exemple. Une meilleure solution consiste à travailler avec des fréquences différentes en réception et en émission.

Avantageusement, la fréquence F2 est différente de la fréquence F1 afin de résoudre les problèmes d'auto aveuglement inhérents aux répéteurs d'une même fréquence en entrée et amplifiée en sortie.

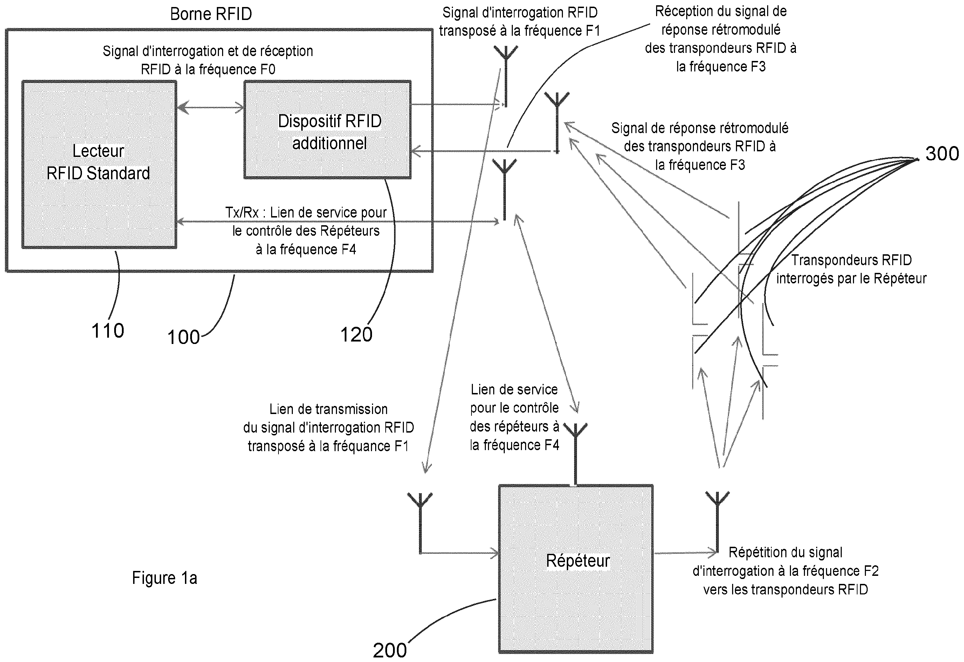

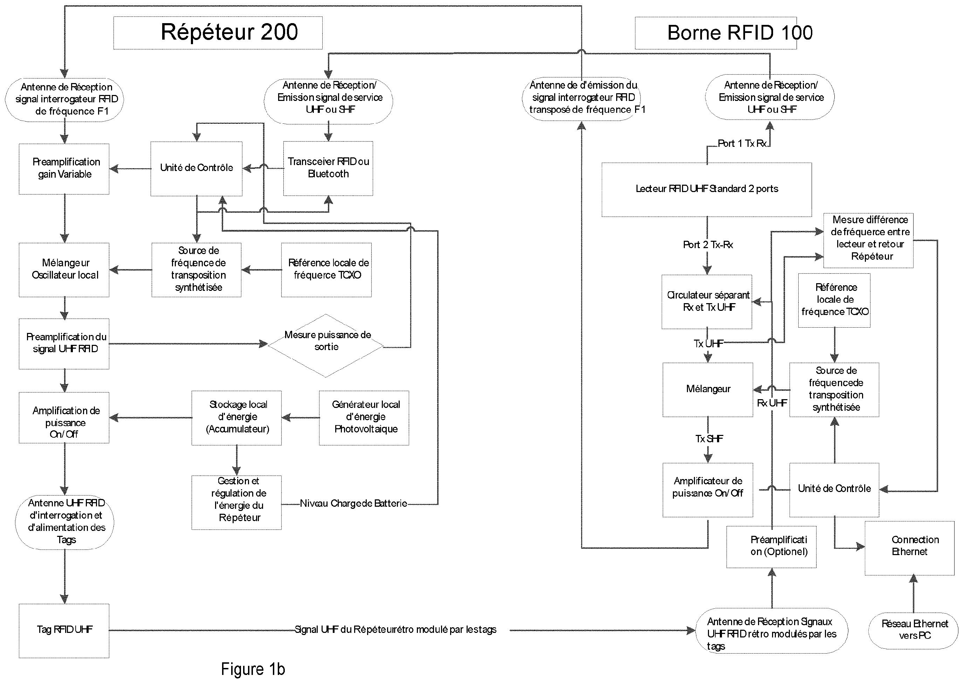

Les figures 1a et 1b illustrent les interactions ayant lieux entre les différents éléments de la présente invention. L'invention comprend une borne RFID 100 comprenant un lecteur RFID standard 110 disponible dans le commerce et un dispositif RFID additionnel 120. La borne RFID 100 est connectée à un réseau informatique par un système filaire et/ou non filaire. Par exemple, la borne RFID 100 peut être connectée à un ordinateur par un câble Ethernet. Le dispositif RFID additionnel 120 est un module additionnel pour générer des signaux à une fréquence F1 à partir de signaux de fréquence F0, préférentiellement modulés en amplitude et avantageusement selon les normes UHF RFID ISO18000-6 et ePC Gen2.

Selon un mode de réalisation, la borne RFID 100 comprend 3 antennes. La première antenne correspond à l'émission d'au moins un signal d'interrogation à une fréquence F1. Préférentiellement la fréquence F1 est comprise entre 2,4GHz et 2,5GHz, et avantageusement entre 2,4GHz et 2,4835GHz avantageusement entre 2,446GHz et 2,454GHz, et de préférence est égale à 2.45 GHz. La deuxième antenne correspond à la réception d'au moins un signal de réponse rétrodiffusé en provenance d'au moins un transpondeur RFID 300 à la fréquence F3. Enfin la troisième antenne correspond à l'émission et à la réception des signaux de pilotage vers et depuis au moins un répéteur 200 à une fréquence F4. Ce canal de communication de service est avantageusement découplé du dispositif RFID additionnel 120 de la borne RFID 100, ainsi, selon un mode de réalisation et avantageusement, la troisième antenne est en lien direct avec le lecteur RFID standard 110.

Selon un mode de réalisation, le répéteur 200 comprend au moins trois antennes. Une première antenne correspond à la réception du signal d'interrogation à la fréquence F1 en provenance de la borne RFID 100. La deuxième antenne correspond à la répétition du signal d'interrogation à la fréquence F2 vers au moins un transpondeur RFID 300. Enfin la troisième antenne correspond au canal de communication de service permettant l'émission et la réception de signaux à une fréquence F4 en provenance et vers la borne RFID 100.

Avantageusement, la fréquence F4 est égale à la fréquence F0.

Avantageusement, la fréquence F0 est égale à la fréquence F2.

Avantageusement, la fréquence F3 est égale à la fréquence F0.

Selon un mode de réalisation, les transpondeurs RFID 300 sont des transpondeurs standards disponibles dans le commerce, avantageusement la fréquence F2 est égale à la fréquence F3.

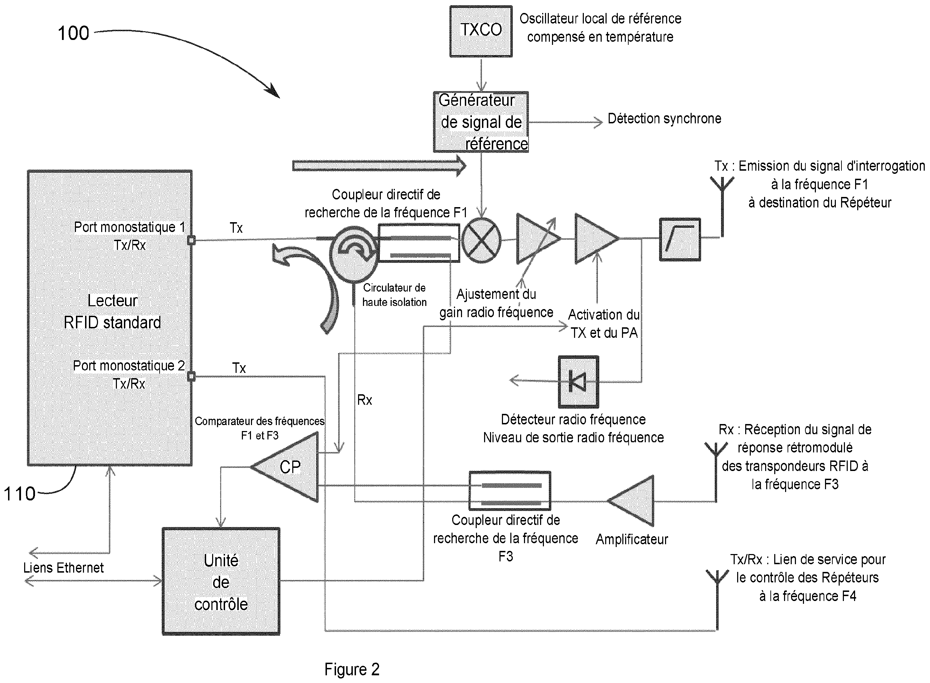

La figure 2 illustre l'architecture d'une borne RFID 100 selon un mode de réalisation de la présente invention. La borne RFID 100 comprend un lecteur RFID standard 110 du commerce et un dispositif RFID additionnel 120. Le lecteur RFID standard 110 est un lecteur RFID standard du commerce disposant d'au moins deux ports mono-statiques.

Selon un mode de réalisation, le premier port mono-statique est connecté à la première et à la deuxième antenne de la borne RFID 100 en passant par un circulateur de haute isolation afin de séparer les signaux entrants des signaux sortants.

Selon un mode de réalisation, le dispositif RFID additionnel 120 effectue alors une conversion de fréquences des signaux émis et reçus par la borne RFID 100.

Le second port mono-statique est connecté directement à la troisième antenne de la borne RFID 100. Le second port mono-statique sert alors de port de communication pour le canal de communication de service avec le répéteur 200.

Selon un mode de réalisation, la borne RFID 100 comprend un lecteur RFID standard UHF Gen2 Standard type mono-statique 110. Le terme mono-statique indique qu'un même port comprend la réception et l'émission de signaux, les signaux émis sont appelés Tx et les signaux reçus RX.

Selon un mode de réalisation, la borne RFID 100 comprend un circulateur permettant d'isoler le signal de réponse rétrodiffusé par les transpondeurs RFID 300.

Selon un mode de réalisation, la borne RFID 100 comprend un générateur de signal de référence comprenant ou composé d'un oscillateur local de référence, préférentiellement compensé en température. Avantageusement, la fréquence de cet oscillateur local de référence est identique à la fréquence de l'oscillateur local de référence compris par le répéteur 200.

Selon un mode de réalisation, la borne RFID 100 comprend un générateur de signal de référence à la fréquence de 1,55GHz qui mélangée au signal d'interrogation à une fréquence proche de 900MHz produit un signal d'interrogation transposé à 2,45GHz.

Selon un mode de réalisation, la borne RFID 100 comprend un amplificateur de puissance alimentant une antenne à 2,45GHz et pouvant communiquer à plusieurs dizaines de mètres des répéteurs 300.

Selon un mode de réalisation, la borne RFID 100 comprend une antenne 2,45GHz adaptée à transmettre le signal d'interrogation vers les répéteurs 200.

Selon un mode de réalisation, la borne RFID 100 comprend un système de mesure du décalage en fréquence entre le signal émis par le lecteur RFID standard 110 et celui rétrodiffusé par les transpondeurs RFID 300 issus des répéteurs 200.

Selon un mode de réalisation, la borne RFID 100 comprend un canal de communication de service permettant à la borne RFID 100 de communiquer avec les répéteurs 200 via une antenne adaptée à la fréquence de service.

Selon un mode de réalisation, la borne RFID comprend une Unité de Contrôle gérant la borne RFID 100 et envoyant les données de pilotage vers les répéteurs 200 via le canal de communication de service.

Selon un mode de réalisation, lorsqu'un signal d'interrogation de fréquence F0 est émis par le lecteur RFID standard 110 mono-statique, il transite via un circulateur de haute isolation afin de séparer les signaux reçus des signaux émis. Ensuite, le signal d'interrogation de fréquence F0 passe au travers d'un coupleur directif de recherche de la fréquence F1 avant d'être mélangé au niveau d'un mixeur analogique avec le signal de référence de fréquence F1-F0 et/ou F1+F0. En sortie de ce mixeur, le signal d'interrogation a pour fréquence la fréquence F1. Ensuite ce signal d'interrogation de fréquence F1 est amplifié puis émis par la borne RFID 100 à destination d'au moins un répéteur 200.

Selon un mode de réalisation, lorsqu'un signal de réponse rétrodiffusé de fréquence F3 est reçus par la borne RFID 100, il est d'abord amplifié puis transite via un coupleur directif de recherche de la fréquence F3 avant de passer au travers d'un circulateur de haute isolation de sorte à être séparé des signaux d'interrogation émis par le lecteur RFID standard 110.

Selon un mode de réalisation, dans le cas d'un lecteur RFID standard 110 bi-statique, le port de communication pour l'émission de signaux d'interrogation et le port de communication pour la réception de signaux de réponse rétrodiffusés sont distinct l'un de l'autre permettant ainsi de na pas recourir à un circulateur de haute isolation.

Selon un mode de réalisation, lorsqu'un signal d'interrogation de fréquence F0 est émis par le lecteur RFID standard 110 bi-statique, il passe au travers d'un coupleur directif de recherche de la fréquence F1 avant d'être mélangé au niveau d'un mixeur analogique avec le signal de référence de fréquence F1-F0 et/ou F1+F0. En sortie de ce mixeur, le signal d'interrogation a pour fréquence la fréquence F1. Ensuite ce signal d'interrogation de fréquence F1 est amplifié puis émis par la borne RFID 100 à destination d'au moins un répéteur 200.

Selon un mode de réalisation, lorsqu'un signal de réponse rétrodiffusé de fréquence F3 est reçus par la borne RFID 100, il est d'abord amplifié et transite ensuite via un coupleur directif de recherche de la fréquence F3.

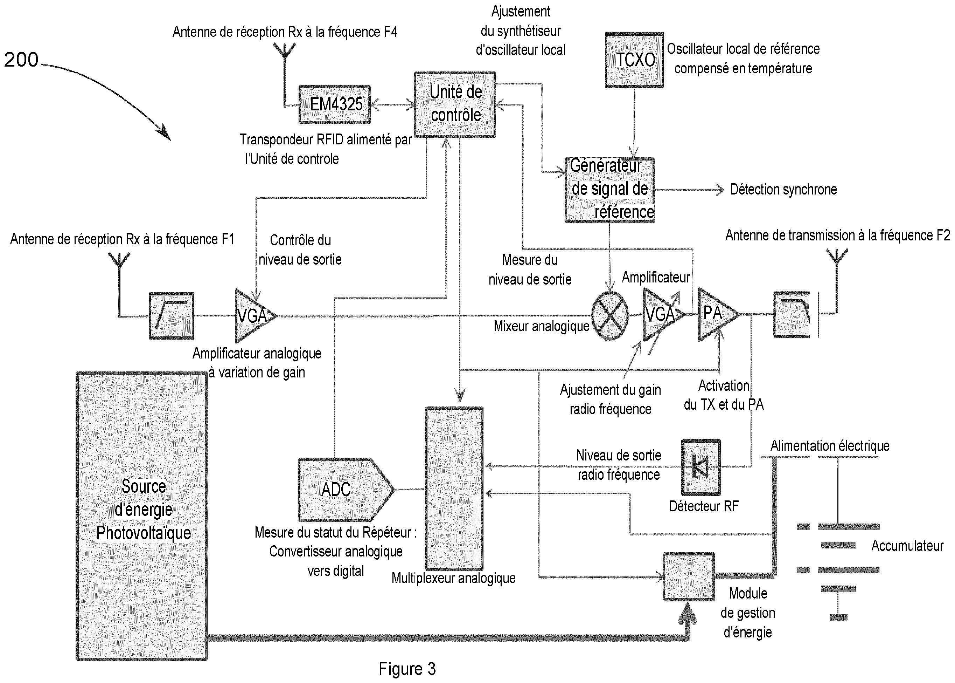

La figure 3 illustre l'architecture d'un répéteur 200 selon un mode de réalisation de la présente invention. Un répéteur 200 comprend au moins une antenne de réception du signal d'interrogation de fréquence F1. Cette antenne transmet le signal reçu à un mixeur analogique afin de réaliser la transposition de fréquence à la fréquence F2. Le mixeur analogique est connecté au générateur de signal de référence comprenant l'oscillateur local de référence afin de réaliser la transposition analogique de fréquence. Ce signal de référence est stabilisé à la fréquence F1-F2 et/ou F1+F2 par l'utilisation de l'oscillateur local de référence compensé en température. Une Unité de Contrôle pilote le générateur de signal de référence. Cet unité de contrôle est également connectée à un transpondeur RFID du type EM4325 par exemple, ce transpondeur RFID est dit transpondeur RFID additionnel associé au répéteur 200.

Selon un mode de réalisation, le répéteur 200 comprend au moins une source d'alimentation électrique, avantageusement, cette source d'alimentation est une batterie rechargeable.

Selon un mode de réalisation, lorsqu'un signal d'interrogation émis par la borne RFID 100 est reçu par le répéteur 200, il est transite d'abord par un amplificateur de gain analogique avant d'être mélangé au niveau d'un mixeur analogique avec le signal de référence de fréquence F1-F2 et/ou F1+F2. Puis le signal d'interrogation de fréquence F2 est amplifié avant d'être émis à destination d'au moins un transpondeur RFID 300.

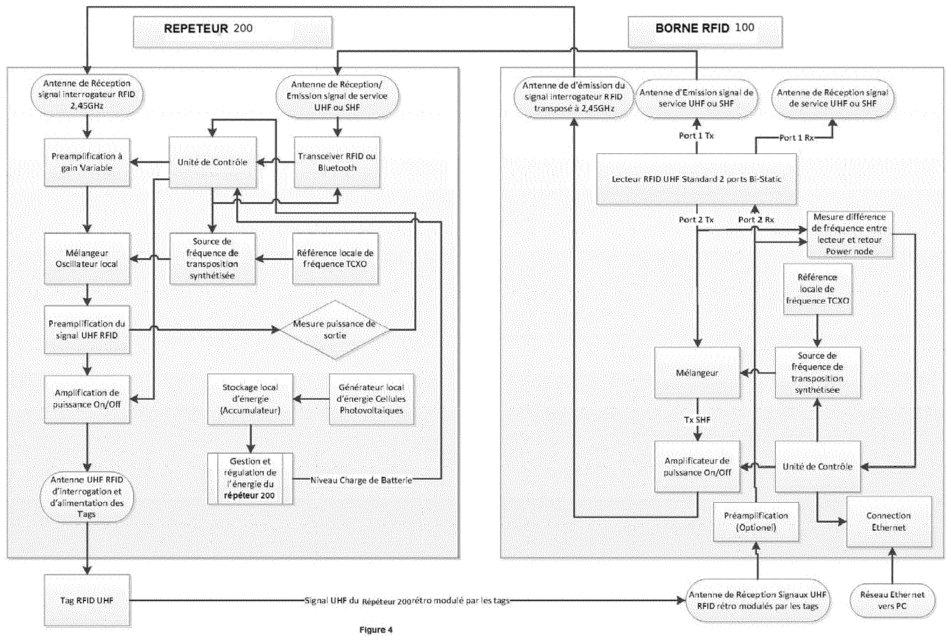

La figure 4 illustre un diagramme détaillé des interactions entre des éléments d'un système de l'invention, selon un mode de réalisation dans lequel le lecteur RFID standard 110 est un lecteur RFID standard bi-statique, et l'architecture d'une borne RFID 100 avec un lecteur RFID standard bi-statique 110.

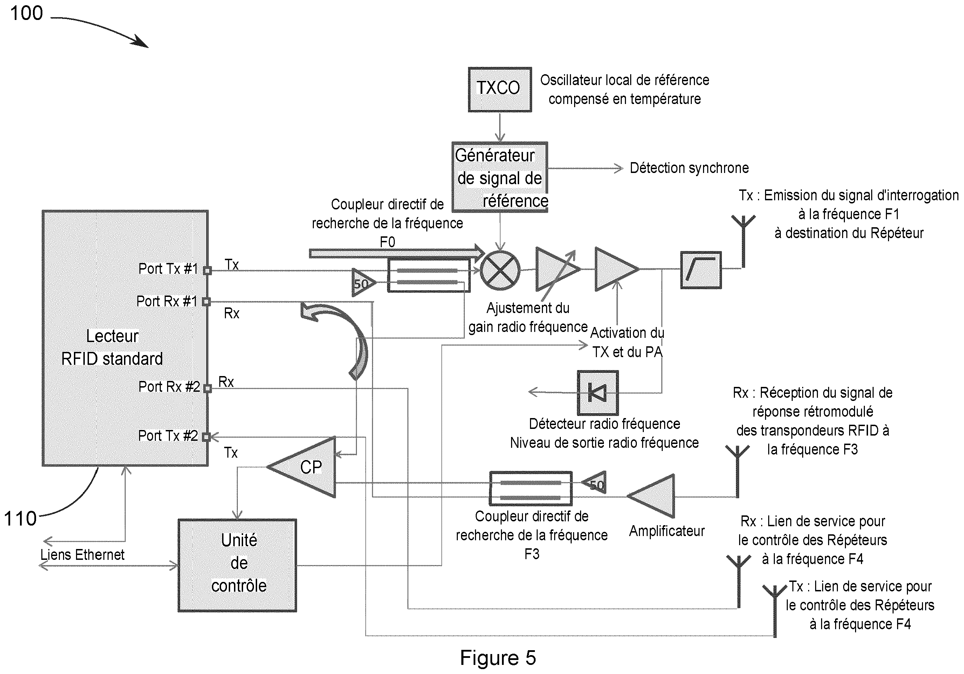

La figure 5 illustre l'architecture d'une borne RFID 100 avec un lecteur RFID standard bi-statique 110.

Pour la description des différents composants et étapes individuels de ces figures 4 et 5, on pourra se référer aux descriptions relatives aux figures 1b et 2 mettant en jeu des lecteurs RFID mono-statiques 110.

L'utilisation d'un lecteur RFID standard bi-statique 110 présente plusieurs avantages. Notamment, il supprime le besoin d'avoir un coupleur directif du côté de la borne RFID 100 pour isoler le signal émis Tx du signal reçu Rx. Ces signaux sont acheminés vers le lecteur RFID standard bi-statique 110 selon deux ports de communication différents et sont donc beaucoup mieux isolés. Typiquement un double circulateur permet d'obtenir 50db (Décibel) d'isolation.

Par ailleurs, ce mode de réalisation, permet d'améliorer la sensibilité du lecteur RFID standard 110. Typiquement, on obtient -100dBm (dBm : rapport de puissance en décibels (dB) entre la puissance mesurée et un milliwatt (mW)) pour un lecteur RFID standard bi-statique contre -80dBm pour un lecteur RFID standard mono-statique. Avec ce gain de 20dB, on obtient théoriquement une portée de lecture des transpondeurs RFID 300 par la borne RFID 100 dix fois plus importante, passant de quelques dizaines de mètres à quelques centaines de mètres à même puissance d'alimentation des transpondeurs RFID 300. Le facteur limitant est alors la liaison entre la borne RFID 100 et les répéteurs 200 à la fréquence avantageuse de 2,45GHz.

Selon un mode de réalisation, l'unité de contrôle et le transpondeur RFID additionnel associé au répéteur 200 échangent des données. L'unité de contrôle envoie par exemple au transpondeur RFID additionnel, associé au répéteur 200, des données concernant l'état du répéteur 200, par exemple son niveau de batterie, son état de fonctionnement (marche ou arrêt) et/ou toutes autres informations utiles afin de pouvoir gérer au mieux le réseau de répéteurs 200. Le transpondeur RFID additionnel associé au répéteur 200 est connecté à la troisième antenne du répéteur 200. Cette antenne correspond au canal de communication de service apte à recevoir un signal de pilotage à une fréquence F4 et à émettre un signal de réponse rétrodiffusé à une fréquence F4. Les informations échangées par ce canal de communication de service servent par exemple à l'ajustement de la fréquence F2 par rapport à la fréquence F0.

Avantageusement, le transpondeur RFID additionnel associé au répéteur 200 est un transpondeur RFID actif alimenté par la batterie du répéteur 200.

Suivant un mode de réalisation, la source d'énergie du répéteur 200 provient d'un accumulateur se chargeant à partir de cellules photovoltaïques par exemple. De ce fait le répéteur 200 est indépendant de tout raccordement électrique et ne nécessite que peu de maintenance.

Selon un mode de réalisation, le répéteur 200 dispose d'une batterie et/ou d'une alimentation filaire.

Selon un mode de réalisation, les répéteurs 200 ne disposent pas d'unité de traitement des données complexes. Seule la récupération de données de surveillance et de commandes de base nécessite un automate local de base.

Selon un mode de réalisation, la borne RFID 100 peut communiquer avec le répéteur 200 via le canal de communication de service au travers du transpondeur RFID additionnel associé au répéteur 200. La borne RFID 100 peut ainsi recueillir des données concernant par exemple l'état de charge du répéteur 200, le gain d'amplification, la mesure des signaux de réception et d'émission et/ou la mesure de la fréquence locale de référence.

Selon un mode de réalisation, le pilotage à distance des répéteurs 200 peut être effectuée soit par l'utilisation d'un transpondeur RFID pour envoyer et recevoir des informations des répéteurs 200 en utilisant un des ports libres du lecteur RFID standard 110. Par exemple, la mémoire du transpondeur BAP (EM4325) à laquelle on peut aussi bien accéder par RFID que par un lien série numérique câblé permet l'échange dans les deux sens entre la borne RFID 100 et le répéteur 200. Un petit module type Bluetooth Low Energy à 2,45GHz peut tout aussi bien remplir la même fonction.

Avantageusement, le canal de communication de service n'est jamais en activité lorsque le répéteur 200 reçoit et/ou émet un ou plusieurs signaux en provenance et/ou à destination de la borne RFID 100 et/ou d'un ou plusieurs transpondeurs RFID 300. Ainsi le canal de communication de service fonctionnant à la fréquence F4 n'est jamais en activité lorsque des signaux de fréquence F0, F1, F2 et F3 sont en cours de transmission et/ou de réception. De ce fait aucune interférence n'est possible.

Selon un mode de réalisation les répéteurs 200 comprennent une antenne de réception à 2,45GHz du signal d'interrogation envoyé par la borne RFID 100.

Selon un mode de réalisation les répéteurs 200 comprennent une Unité de Contrôle gérant les données reçues de pilotage en provenance de la borne RFID 100 via le canal de communication de service en bande ISM RFID à une fréquence proche de 900MHz ou en BlueTooth Low Energy.

Selon un mode de réalisation les répéteurs 200 comprennent un préamplificateur à gain variable commandé par l'Unité de Contrôle.

Selon un mode de réalisation les répéteurs 200 comprennent une référence de fréquence compensée en température.

Selon un mode de réalisation les répéteurs 200 comprennent un générateur de signal de référence à la fréquence de 1,55GHz, par exemple, à partir de la référence de fréquence ajustée par l'Unité de Contrôle afin d'être le plus proche de la fréquence F0 de la borne RFID 100.

Selon un mode de réalisation les répéteurs 200 comprennent un mixeur afin de transposer analogiquement dans la bande ISM à une fréquence proche de 900MHz le signal reçu de la borne RFID à 2,45GHz par mélange avec un oscillateur local de référence à 1,55GHz par exemple.

Selon un mode de réalisation les répéteurs 200 comprennent un amplificateur de puissance qui alimente une antenne de fréquence proche de 900MHz permettant d'interroger les transpondeurs RFID 300 avec une puissance rayonnée maximale autorisée, et contrôlée par l'Unité de Contrôle.

Selon un mode de réalisation les répéteurs 200 comprennent une antenne de réception adaptée à la bande de réception du signal de service de fréquence proche de 900MHz et/ou de 2,45GHz.

Selon un mode de réalisation les répéteurs 200 comprennent une alimentation autonome de type batterie ou accumulateur pouvant être rechargée par une ou plusieurs sources d'énergie ambiante, lumineuse par exemple.

Selon un mode de réalisation, la présente invention comprend des répéteurs 200 ne disposant pas de processeur et aptes à répéter les signaux interrogateurs en provenance d'une borne RFID 100 sans effectuer de démodulation des signaux interrogateurs.

Selon un mode de réalisation, il existe une latence de moins de 1 micro seconde selon le système de la présente invention : l'insertion d'un répéteur 200 dans la transmission d'un signal d'interrogation vers le transpondeur RFID 300 est transparente d'un point de vue protocole UHF Gen2 vu par la borne RFID 100 qui peut ainsi comprendre un simple lecteur RFID standard 110 du commerce avec un dispositif RFID additionnel 120 pour émettre les signaux d'interrogation à une fréquence F1, de préférence cette fréquence est égale à 2.45 GHz, à partir d'un signal de fréquence F0, de préférence cette fréquence est avantageusement proche de 900 MHz, et préférentiellement égale à 866MHz en Europe, modulé en amplitude selon les normes UHF RFID ISO18000-6 et ePC Gen2.

Selon un mode de réalisation, l'architecture système proposée par la présente invention permet la mise à jour d'une installation RFID existante par le simple ajout d'un dispositif RFID additionnel 120 ne contenant que le nécessaire pour transposer et amplifier le signal, mono-statique par exemple, d'un lecteur RFID standard 110 déjà existant. Le coût d'infrastructure est ainsi réduit à un module additionnel central et à des répéteurs qui n'ont pas à être alimentés sur secteur car ne nécessitant pas de puissants traitements des données embarqués.

Selon un mode de réalisation, l'architecture proposée, avec des liens entièrement sans fils de communication et d'alimentation en ce qui concerne les répéteurs 200, permet une installation simple sans modification du local à surveiller. Seules la ou les bornes RFID 100 qui centralisent les lectures doivent être connectées à un réseau informatique par WiFi et/ou par Ethernet et disposer d'une source d'alimentation électrique du type prise secteur par exemple. Les répéteurs 200 quant à eux peuvent fonctionner sur batteries rechargées par des cellules photovoltaïques sensibles à la lumière artificielle ambiante dans le lieu d'installation par exemple.

Selon un mode de réalisation, la disposition des répéteurs 200 peut être changée régulièrement au gré des changements de présentation des produits dans un magasin de prêt à porter par exemple. L'absence de câbles permet à un personnel non qualifié de déplacer les répéteurs 200 de quelques mètres sans avoir à reconfigurer l'installation.

Selon un mode réalisation, la fréquence d'interrogation F0 est transposée vers une fréquence différente autorisée sans licence comme par exemple la bande ISM 2,45GHz par le dispositif RFID additionnel 120 de la borne RFID 100. Ce signal d'interrogation est transmis vers des répéteurs 200 distribués dans l'espace à inventorier. Ainsi les interférences à la fréquence F0 typique des lecteurs RFID standards 110, soit à une fréquence proche de 900 MHz par exemple, sont réduites, ainsi les faibles niveaux rétrodiffusés par les transpondeurs RFID 300 arrivent à l'antenne UHF de la borne RFID 100 avec un niveau de bruit faible. De plus la puissance du signal en sortie du lecteur UHF RFID 110 n'a pas besoin d'être élevée car il ne télé-alimente plus directement les transpondeurs RFID 300 et se situe entre 0dBm et 30dBm, avantageusement entre 10dBm et 20dBm et de préférence entre 10 et 18 dBm. Ces puissances permettent de faire fonctionner le récepteur du lecteur RFID standard 110 dans les meilleures conditions possibles en minimisant le niveau parasite du signal en émission qui est réinjecté au niveau du récepteur et qui réduit la dynamique donc la sensibilité du récepteur.

Selon un mode de réalisation, la présente invention concerne un système synchrone ou quasi-synchrone entre l'émission d'un signal interrogateur et la réception d'un signal de réponse rétrodiffusé. Cette synchronicité ou quasi-synchronicité est nécessaire pour maintenir les performances initiales du lecteur RFID standard 110.

Selon un mode de réalisation, la différence des fréquences est inférieure à 500 Hz entre la fréquence F2 des répéteurs 200 et la fréquence F0 du lecteur RFID standard 110 de la borne RFID 100 dans le cas où la fréquence F3 est égale à la fréquence F2. Pour une différence de fréquence supérieure à 500 Hz des baisses de performance en lecture sont perceptibles. Une fois les fréquences des répéteurs 200 calées, ces dernières restent stables sur une période de plusieurs jours notamment par la mise en oeuvre d'oscillateurs local de références compensés en température qui assurent des stabilités de quelques ppm.

Selon un mode de réalisation, le signal d'interrogation répété par le répéteur 200 de fréquence F2 consiste en une modulation d'amplitude d'une onde électromagnétique porteuse de fréquence F2. Ce signal d'interrogation répété de fréquence F2 agit alors comme une onde énergisante en plus de transmettre des informations aux transpondeurs RFID 300. Cette télé-alimentation est configurée pour fournir suffisamment d'énergie aux transpondeurs RFID 300 afin qu'ils puissent émettre un signal rétrodiffusé à destination de la borne RFID 100.

Selon un mode de réalisation, le répéteur 200 comprend un boîtier et le transpondeur RFID additionnel est solidaire dudit boîtier.

Selon un mode de réalisation, le répéteur 200 est solidaire du transpondeur RFID additionnel qui lui est associé.

Selon un mode de réalisation, le répéteur 200 est le transpondeur RFID additionnel qui lui est associé sont connectés entre eux de manière filaire et/ou non filaire.

Selon un mode de réalisation particulier, le répéteur 200 peut comprendre plusieurs canaux de répétition du signal d'interrogation configurés pour transmettre des signaux d'interrogation répétés à la même fréquence et/ou à des fréquences différentes.

Selon un mode particulièrement avantageux, le répéteur 200 peut comprendre plusieurs canaux de répétition du signal d'interrogation configurés pour transmettre des signaux d'interrogation répétés à la même fréquence avantageuse F2.

Selon ce mode de réalisation, chacun de ces canaux, au nombre de N par exemple, comprend une antenne distincte. Chaque antenne est configurée pour émettre un signal d'interrogation répété à la fréquence F2 à destination des transpondeurs RFID 300.

Selon un mode de réalisation avantageux, les N antennes sont spatialement espacées les unes des autres. Cela permet avantageusement de couvrir une plus grande surface de répétition de signaux d'interrogation répétés de fréquence F2.

Selon ce mode de réalisation, la borne RFID 100 peut sélectionner un canal de répétition en particulier pour répéter le signal d'interrogation en utilisant le canal de communication de service de fréquence F4. Ainsi, la borne RFID 100 peut décider quelle antenne parmi les N antennes émet le signal d'interrogation répété à la fréquence F2.

Ce mode de réalisation est particulièrement avantageux car il permet d'étendre de manière importante la couverture spatiale d'un seul répéteur 200. En simplement déployant dans un espace les N antennes, un seul répéteur 200 est apte à couvrir une surface qui nécessiterait N répéteurs 200 comprenant une seule antenne.

Ce mode de réalisation est donc particulièrement avantageux économiquement.

Toujours selon ce mode de réalisation, le rayonnement de chaque antenne est pilotable depuis la borne RFID 100 de sorte à pouvoir réaliser une localisation bidimensionnelle et/ou tridimensionnelle d'un transpondeur RFID 300 disposé dans l'espace couvert par le répéteur 200 et ses antennes.

Par exemple, la position du transpondeur RFID 300 peut être déduite par mesure du temps de réponse entre l'émission du signal d'interrogation et la réception du signal de réponse rétrodiffusé par ledit transpondeur RFID 300 et cela suivant au moins deux et/ou trois antennes différentes de sorte à pouvoir trianguler la position du transpondeur RFID 300.

Selon un mode de réalisation, la localisation d'un transpondeur RFID 300 est également possible en utilisant plusieurs répéteurs 200 répartis selon l'espace dans lequel est disposé ledit transpondeur RFID 300.

L'utilisation du dispositif RFID additionnel 120 permet, par simple ajout de ce module sur un lecteur RFID standard 110, de permettre à celui-ci de communiquer à diverses fréquences selon la configuration du dispositif RFID additionnel 120. Ainsi, il est avantageusement possible d'intégrer une solution basée sur un réseau de Power Nodes, ou de répéteurs, dans un environnement RFID préexistant en simplement ajoutant ce dispositif RFID additionnel 120 aux lecteurs RFID standards 110 déjà en place afin de permettre la communication suivant diverses fréquences.

Le dispositif RFID additionnel 120 est connecté au lecteur RFID standard 110 de manière filaire et/ou non filaire. Il assure une transposition de fréquence de tous signaux émis par le lecteur RFID standard 110 suivant sa configuration.

De même, le dispositif RFID additionnel 120 réalise, si nécessaire, une transposition de tous signaux reçus suivant sa configuration avant retransmission au lecteur RFID standard 110.

Selon un mode de réalisation particulier, le dispositif RFID additionnel 120 est configuré pour transposer, de manière analogique ou non, un signal de réponse rétrodiffusé de fréquence F3 émis, par un transpondeur RFID 300 par exemple, en un signal de réponse rétrodiffusé de fréquence F0 à destination du lecteur RFID standard 110 contenu avec le dispositif RFID additionnel 120 dans la borne RFID 100.

Le dispositif RFID additionnel 120 est applicable à tout type de lecteur RFID standard 110 qu'il soit mono-statique et/ou bi-statique. Son installation sur un lecteur RFID standard 110 se réalise par exemple par simple connexion filaire au niveau des ports de communication du lecteur RFID standard 110.

Selon un mode de réalisation, le dispositif RFID additionnel 120 est configuré pour effectuer une transposition uniquement analogique de fréquence.

Selon un mode de réalisation, le dispositif RFID additionnel 120 est configuré pour effectuer une transposition de fréquence d'un signal de fréquence F0 en un signal de fréquence F1 et cela indépendamment du type de modulation du signal de fréquence F0.

L'invention n'est pas limitée aux modes de réalisations précédemment décrits et s'étend à tous les modes de réalisation couverts par les revendications.

## Revendications

1. Système de localisation de transpondeurs RFID (300) comprenant un système d'interrogation électromagnétique des transpondeurs RFID (300), comprenant au moins une borne RFID (100) comportant au moins un lecteur RFID (110), l'au moins une borne RFID (100) est configurée pour émettre un signal d'interrogation à une fréquence F1, **caractérisé en ce que** le système comprend au moins un dispositif RFID dit répéteur (200), **en ce que** l'au moins un répéteur (200) est configuré pour répéter à une fréquence F2 différente de F1 ledit signal d'interrogation de fréquence F1, ledit signal d'interrogation répété de fréquence F2 étant destiné à être reçu par l'au moins un transpondeur RFID (300), **en ce que** l'au moins un transpondeur RFID (300) est configuré pour émettre un signal de réponse rétrodiffusé à une fréquence F3 en réponse à la réception dudit signal d'interrogation répété et **caractérisé en ce qu'**afin de répéter à une fréquence F2 ledit signal d'interrogation de fréquence F1 l'au moins un répéteur (200) est configuré pour effectuer une transposition uniquement analogique de fréquence depuis la fréquence F1 vers la fréquence F2, l'au moins un répéteur (200) comprenant un générateur de signal de référence et la transposition uniquement analogique de fréquence comprenant un mélange dudit signal d'interrogation de fréquence F1 avec un signal de référence généré par ledit générateur de signal de référence à une fréquence F1-F2 et/ou F1+F2 de manière à fournir ledit signal d'interrogation répété de fréquence F2, l'au moins un transpondeur RFID (300) étant localisé dans un espace d'interrogation couvert par le répéteur (200), et **en ce que** le répéteur (200) comprend au moins deux antennes d'interrogation à la fréquence F2 dont le rayonnement est contrôlé par l'au moins une borne RFID (100) permettant une localisation, par balayage de l'espace d'interrogation, de l'au moins un transpondeur RFID (300).

2. Système de localisation selon la revendication précédente dans lequel le répéteur (200) comprend au moins un transpondeur RFID additionnel et au moins une antenne additionnelle adaptée à une fréquence de service F4, dans lequel le transpondeur RFID additionnel et l'antenne additionnelle sont configurés pour établir un canal de communication de service de fréquence F4 entre le répéteur (200) et la borne RFID (100) de sorte à permettre un pilotage de le répéteur (200) par la borne RFID (100), la fréquence F4 étant différente de la fréquence F1, et dans lequel les données de pilotage comprennent au moins une instruction prise parmi : activation du répéteur (200), inactivation du répéteur (200), vérification du niveau de charge et de cycles d'au moins une source d'alimentation électrique du répéteur (200), contrôle de la fréquence du signal d'interrogation répété de fréquence F2, contrôle d'une puissance d'émission du signal d'interrogation répété de fréquence F2, contrôle d'un gain d'un récepteur du signal d'interrogation de fréquence F1, et dans lequel le rayonnement desdites au moins deux antennes d'interrogation à la fréquence F2 est contrôlé, par l'au moins une borne RFID via le canal de communication de service de fréquence F4, permettant une localisation par balayage de l'espace d'interrogation de l'au moins un transpondeur RFID.

3. Système de localisation selon la revendication précédente dans lequel l'au moins un répéteur (200) comprend au moins les éléments suivants :
- Une antenne de réception configurée pour recevoir ledit signal d'interrogation de fréquence F1 émis par l'au moins une borne RFID (100) ;
- Au moins une antenne d'émission configurée pour émettre le signal d'interrogation répété de fréquence F2 à destination de l'au moins un transpondeur RFID (300) ;
- ledit générateur de signal de référence à la fréquence F1-F2 et/ou F1 +F2;
- Un mixeur analogique dudit signal d'interrogation reçu de fréquence F1 avec ledit signal de référence de fréquence F1-F2 et/ou F1+F2 configuré pour effectuer ledit mélange et pour délivrer en sortie ledit signal d'interrogation répété de fréquence F2 ;
- Une Unité de Contrôle gérant lesdites données de pilotage reçues de l'au moins une borne RFID (100) via ledit canal de communication de service à la fréquence F4;
- Le transpondeur RFID additionnel configuré pour recevoir et émettre des signaux de service à la fréquence F4.
- L'antenne additionnelle configurée pour émettre et recevoir des signaux de service à la fréquence F4.

4. Système de localisation selon l'une quelconque des revendications précédentes dans lequel le générateur de signal de référence de l'au moins un répéteur (200) comprend un oscillateur local de référence dont la fréquence est égale à F1-F2 et/ou F1+F2 de manière à fournir ledit signal d'interrogation répété de fréquence F2.

5. Système de localisation selon l'une quelconque des revendications précédentes dans lequel l'au moins un lecteur RFID (110) de l'au moins une borne RFID (100) est configuré pour émettre des signaux d'interrogation de fréquence F0 et dans lequel l'au moins une borne RFID (100) comprend au moins un dispositif RFID additionnel (120), connecté à l'au moins un lecteur RFID (110) et configuré pour transposer les signaux d'interrogation de fréquence F0 émis par l'au moins un lecteur RFID (110) en les signaux d'interrogation de fréquence F1 destinés à être reçus par l'au moins un répéteur (200).

6. Système de localisation selon la revendication précédente dans lequel l'au moins un dispositif RFID additionnel (120) est configuré pour effectuer une transposition uniquement analogique des signaux d'interrogation de fréquence F0 en les signaux d'interrogation de fréquence F1.

7. Système de localisation selon la revendication précédente dans lequel ledit lecteur RFID (110) est un lecteur RFID UHF Gen2 mono-statique et dans lequel l'au moins une borne RFID (100) comprend les éléments suivants :
- Un circulateur permettant d'isoler le signal de réponse rétrodiffusé par l'au moins un transpondeur RFID (300) ;
- Un générateur de signal de référence à la fréquence F1-FO et/ou F1+FO qui mélangé au signal d'interrogation à la fréquence F0 produit un signal d'interrogation de fréquence F1 ;
- Un mixeur analogique du signal d'interrogation de fréquence F0 avec le signal de référence de fréquence F1-FO et/ou F1+FO ;
- Une antenne configurée pour transmettre le signal d'interrogation de fréquence F1 à destination de l'au moins un répéteur (200) ;
- Une antenne configurée pour recevoir le signal de réponse de fréquence F3 en provenance de l'au moins un transpondeur RFID (300) ;
- Un canal de communication de service permettant à l'au moins une borne RFID (100) de communiquer en émission et en réception avec l'au moins un répéteur (200) via une antenne adaptées à une fréquence F4 de service, la fréquence F4 étant différente de la fréquence F1.

8. Système de localisation selon l'une quelconque des revendications 5 et 7 dans lequel ledit lecteur RFID (110) est un lecteur RFID UHF Gen2 Bi-statique et dans lequel l'au moins une borne RFID (100) comprend les éléments suivants :
- Un générateur de signal de référence à la fréquence F1-FO et/ou F1+FO qui mélangé au signal d'interrogation à la fréquence F0 produit un signal d'interrogation de fréquence F1 ;
- Un mixeur analogique du signal d'interrogation de fréquence F0 avec le signal de référence de fréquence F1-FO et/ou F1+FO ;
- Une antenne configurée pour transmettre le signal d'interrogation de fréquence F1 à destination de l'au moins un répéteur (200) ;
- Une antenne configurée pour recevoir le signal de réponse de fréquence F3 en provenance de l'au moins un transpondeur RFID (300) ;
- Un canal de communication de service permettant à l'au moins une borne RFID (100) de communiquer avec l'au moins un répéteur (200) en émission via une première antenne adaptée à une fréquence F4 de service et en réception via une deuxième antenne adaptée à une fréquence F4, la fréquence F4 étant différente de la fréquence F1.

9. Système de localisation selon l'une quelconque des deux revendications précédentes dans lequel ledit générateur de signal de référence de l'au moins une borne RFID (100) comprend un oscillateur local de référence et dans lequel ledit oscillateur local de référence de l'au moins une borne RFID (100) est compensée en température.

10. Système de localisation selon l'une quelconque des trois revendications précédentes dans lequel l'au moins une borne RFID (100) comprend un système de mesure du décalage en fréquence entre le signal d'interrogation de fréquence F0 et le signal de réponse rétrodiffusé de fréquence F3 par l'au moins un transpondeur RFID (300).

11. Système de localisation selon l'une quelconque des revendications précédentes dans lequel ledit signal d'interrogation répété de fréquence F2 émis par l'au moins un répéteur (200) et reçus par l'au moins un transpondeur RFID (300) fournit suffisamment d'énergie audit transpondeur RFID (300) pour que ce dernier émette ledit signal de réponse rétrodiffusé de fréquence F3.

12. Répéteur (200) pour système de localisation de transpondeurs RFID (300), le système comprenant au moins un transpondeur RFID (300) et au moins une borne RFID (100) configurée pour émettre un signal d'interrogation à une fréquence F1, l'au moins un transpondeur RFID (300) étant localisé dans un espace d'interrogation couvert par le répéteur (200), le répéteur (200) étant configuré pour:
- recevoir le signal d'interrogation à la fréquence F1 émis par l'au moins une borne RFID (100) ;
- répéter à une fréquence F2 différente de F1 ledit signal d'interrogation de fréquence F1, ledit signal d'interrogation répété de fréquence F2 étant destiné à être reçu par l'au moins un transpondeur RFID (300) ;
**caractérisé en ce qu'**afin de répéter à une fréquence F2 ledit signal d'interrogation de fréquence F1 l'au moins un répéteur (200) est configuré pour effectuer une transposition uniquement analogique de fréquence depuis la fréquence F1 vers la fréquence F2, l'au moins un répéteur (200) comprenant un générateur de signal de référence et la transposition uniquement analogique de fréquence comprenant un mélange dudit signal d'interrogation de fréquence F1 avec un signal de référence généré par ledit générateur de signal de référence à une fréquence F1-F2 et/ou F1+F2, et **en ce que** le répéteur (200) comprend au moins deux antennes d'émission configurée pour émettre le signal d'interrogation répété de fréquence F2 à destination de l'au moins un transpondeur RFID (300), et **en ce que** le rayonnement desdites au moins deux antennes d'interrogation à la fréquence F2 est contrôlé, par l'au moins une borne RFID (100) via les données de pilotage, permettant une localisation, par balayage de l'espace d'interrogation situé autour du répéteur (200), d'au moins un transpondeur RFID (300).

13. Répéteur (200) selon la revendication précédente dans lequel le répéteur (200) comprend au moins un transpondeur RFID additionnel et au moins une antenne additionnelle adaptée à une fréquence de service F4, dans lequel le transpondeur RFID additionnel et l'antenne additionnelle sont configurés pour recevoir des données de pilotage à une fréquence F4, émises par l'au moins une borne RFID (100) de sorte à permettre un pilotage de l'au moins un répéteur (200) par l'au moins une borne RFID (100), la fréquence F4 étant différente de la fréquence F1, et dans lequel les données de pilotage comprennent au moins une instruction prise parmi : activation du répéteur (200), inactivation du répéteur (200), vérification du niveau de charge et de cycles d'au moins une source d'alimentation électrique du répéteur (200), contrôle de la fréquence du signal d'interrogation répété de fréquence F2, contrôle de la puissance d'émission du signal d'interrogation répété de fréquence F2, contrôle d'un gain d'un récepteur du signal d'interrogation de fréquence F1.

14. Répéteur (200) selon l'une quelconque des deux revendications précédentes disposant de N>1 canaux d'interrogation configurés pour transmettre le signal d'interrogation répété de fréquence F2, chaque canal comprenant une antenne distincte, chaque antenne étant configurée pour émettre un signal d'interrogation répété à la fréquence F2.

15. Répéteur (200) selon la revendication précédente dans lequel ledit transpondeur RFID additionnel associé est configuré pour recevoir des instructions contenues dans les données de pilotage de la borne RFID (100) et le répéteur (200) est configuré pour effectuer au moins une action fonction de ladite instruction, ladite instruction étant l'activation d'un canal d'interrogation à la fréquence F2 parmi les N canaux disponibles du répéteur (200).

## Patentansprüche

1. System zum Orten von RFID-Transpondern (300), das ein System zum elektromagnetischen Abfragen der RFID-Transponder (300) umfasst, welches mindestens ein RFID-Terminal (100) umfasst, das mindestens einen RFID-Leser (110) umfasst, wobei das mindestens eine RFID-Terminal (100) dafür konfiguriert ist, ein Abfragesignal auf einer Frequenz F1 zu senden, **dadurch gekennzeichnet, dass** das System mindestens eine als Repeater (200) bezeichnete RFID-Vorrichtung umfasst, dadurch, dass der mindestens eine Repeater (200) dafür konfiguriert ist, das Abfragesignal der Frequenz F1 auf einer Frequenz F2 zu wiederholen, die sich von F1 unterscheidet, wobei das wiederholte Abfragesignal der Frequenz F2 dazu bestimmt ist, von dem mindestens einen RFID-Transponder (300) empfangen zu werden, dadurch, dass der mindestens eine RFID-Transponder (300) dafür konfiguriert ist, in Antwort auf den Empfang des wiederholten Abfragesignals ein rückgestreutes Antwortsignal auf einer Frequenz F3 zu senden, und **dadurch gekennzeichnet, dass**, um das Abfragesignal der Frequenz F1 auf einer Frequenz F2 zu wiederholen, der mindestens eine Repeater (200) dafür konfiguriert ist, eine rein analoge Frequenzumsetzung aus der Frequenz F1 in die Frequenz F2 durchzuführen, wobei der mindestens eine Repeater (200) einen Referenzsignalgenerator umfasst, und die rein analoge Frequenzumsetzung ein Mischen des Abfragesignals der Frequenz F1 mit einem vom Referenzsignalgenerator auf einer Frequenz F1-F2 und/oder F1+F2 erzeugten Referenzsignal umfasst, um das wiederholte Abfragesignal der Frequenz F2 bereitzustellen, wobei der mindestens eine RFID-Transponder (300) in einem Abfrageraum geortet wird, der vom Repeater (200) abgedeckt wird, und dadurch, dass der Repeater (200) mindestens zwei Antennen zum Abfragen auf der Frequenz F2 umfasst, deren Strahlung von dem mindestens einen RFID-Terminal (100) gesteuert wird, was ein Orten des mindestens einen RFID-Transponders (300) durch Abtasten des Abfrageraums ermöglicht.

2. Ortungssystem nach dem vorstehenden Anspruch, wobei der Repeater (200) mindestens einen zusätzlichen RFID-Transponder und mindestens eine zusätzliche Antenne umfasst, die auf eine Betriebsfrequenz F4 abgestimmt ist, wobei der zusätzliche RFID-Transponder und die zusätzliche Antenne dafür konfiguriert sind, einen Betriebskommunikationskanal der Frequenz F4 zwischen dem Repeater (200) und dem RFID-Terminal (100) herzustellen, um ein Ansteuern des Repeaters (200) durch das RFID-Terminal (100) zu ermöglichen, wobei sich die Frequenz F4 von der Frequenz F1 unterscheidet, und wobei die Ansteuerdaten mindestens eine Anweisung umfassen, ausgewählt aus: Aktivieren des Repeaters (200), Deaktivieren des Repeaters (200), Überprüfen des Ladestands und von Zyklen mindestens einer Stromversorgungsquelle des Repeaters (200), Steuerung der Frequenz des wiederholten Abfragesignals der Frequenz F2, Steuerung einer Sendeleistung des wiederholten Abfragesignals der Frequenz F2, Steuerung einer Verstärkung eines Empfängers des Abfragesignals der Frequenz F1, und wobei die Strahlung der mindestens zwei Antennen zum Abfragen auf der Frequenz F2 von dem mindestens einen RFID-Terminal über den Betriebskommunikationskanal der Frequenz F4 gesteuert wird, was ein Orten des mindestens einen RFID-Transponders durch Abtasten des Abfrageraums ermöglicht.

3. Ortungssystem nach dem vorstehenden Anspruch, wobei der mindestens eine Repeater (200) mindestens die folgenden Elemente umfasst:
- eine Empfangsantenne, die dafür konfiguriert ist, das Abfragesignal der Frequenz F1, das von dem mindestens einen RFID-Terminal (100) gesendet wird, zu empfangen;
- mindestens eine Sendeantenne, die dafür konfiguriert ist, das wiederholte Abfragesignal der Frequenz F2 an den mindestens einen RFID-Transponder (300) zu senden;
- den Generator eines Referenzsignals auf der Frequenz F1-F2 und/oder F1+F2;
- einen analogen Mischer des empfangenen Abfragesignals der Frequenz F1 mit dem Referenzsignal der Frequenz F1-F2 und/oder F1+F2, der dafür konfiguriert ist, das Mischen durchzuführen, und dafür, am Ausgang das wiederholte Abfragesignal der Frequenz F2 zu liefern;
- eine Steuereinheit, die die Ansteuerdaten verwaltet, welche von dem mindestens einen RFID-Terminal (100) über den Betriebskommunikationskanal auf der Frequenz F4 empfangen werden;
- den zusätzlichen RFID-Transponder, der dafür konfiguriert ist, Betriebssignale auf der Frequenz F4 zu empfangen und zu senden;
- die zusätzliche Antenne, die dafür konfiguriert ist, Betriebssignale auf der Frequenz F4 zu senden und zu empfangen.

4. Ortungssystem nach einem der vorstehenden Ansprüche, wobei der Referenzsignalgenerator des mindestens einen Repeaters (200) einen lokalen Referenzoszillator umfasst, dessen Frequenz gleich F1-F2 und/oder F1+F2 ist, um das wiederholte Abfragesignal der Frequenz F2 bereitzustellen.

5. Ortungssystem nach einem der vorstehenden Ansprüche, wobei der mindestens eine RFID-Leser (110) des mindestens einen RFID-Terminals (100) dafür konfiguriert ist, Abfragesignale einer Frequenz F0 zu senden, und wobei das mindestens eine RFID-Terminal (100) mindestens eine zusätzliche RFID-Vorrichtung (120) umfasst, die mit dem mindestens einen RFID-Leser (110) verbunden und dafür konfiguriert ist, die von dem mindestens einen RFID-Leser (110) gesendeten Abfragesignale der Frequenz F0 in die Abfragesignale der Frequenz F1 umzusetzen, die dazu bestimmt sind, von dem mindestens einen Repeater (200) empfangen zu werden.

6. Ortungssystem nach dem vorstehenden Anspruch, wobei die mindestens eine zusätzliche RFID-Vorrichtung (120) dafür konfiguriert ist, eine rein analoge Umsetzung der Abfragesignale der Frequenz F0 in die Abfragesignale der Frequenz F1 durchzuführen.

7. Ortungssystem nach dem vorstehenden Anspruch, wobei der RFID-Leser (110) ein monostatischer RFID UHF Gen2-Leser ist, und wobei das mindestens eine RFID-Terminal (100) die folgenden Elemente umfasst:
- einen Zirkulator, der es ermöglicht, das von dem mindestens einen RFID-Transponder (300) rückgestreute Antwortsignal zu isolieren;
- einen Generator eines Referenzsignals auf der Frequenz F1-F0 und/oder F1+F0, das, mit dem Abfragesignal auf der Frequenz F0 gemischt, ein Abfragesignal der Frequenz F1 ergibt;
- einen analogen Mischer des Abfragesignals der Frequenz F0 mit dem Referenzsignal der Frequenz F1-F0 und/oder F1+F0;
- eine Antenne, die dafür konfiguriert ist, das Abfragesignal der Frequenz F1 an den mindestens einen Repeater (200) zu übertragen;
- eine Antenne, die dafür konfiguriert ist, das von dem mindestens einen RFID-Transponder (300) stammende Antwortsignal der Frequenz F3 zu empfangen;
- einen Betriebskommunikationskanal, der es dem mindestens einen RFID-Terminal (100) ermöglicht, über eine Antenne, die auf eine Betriebsfrequenz F4 abgestimmt ist, sendend und empfangend mit dem mindestens einen Repeater (200) zu kommunizieren, wobei sich die Frequenz F4 von der Frequenz F1 unterscheidet.

8. Ortungssystem nach einem der Ansprüche 5 und 7, wobei der RFID-Leser (110) ein bistatischer UHF Gen2 RFID-Leser ist, und wobei das mindestens eine RFID-Terminal (100) die folgenden Elemente umfasst:
- einen Generator eines Referenzsignals auf der Frequenz F1-F0 und/oder F1+F0, das, mit dem Abfragesignal auf der Frequenz F0 gemischt, ein Abfragesignal der Frequenz F1 ergibt;
- einen analogen Mischer des Abfragesignals der Frequenz F0 mit dem Referenzsignal der Frequenz F1-F0 und/oder F1+F0;
- eine Antenne, die dafür konfiguriert ist, das Abfragesignal der Frequenz F1 an den mindestens einen Repeater (200) zu übertragen;
- eine Antenne, die dafür konfiguriert ist, das von dem mindestens einen RFID-Transponder (300) stammende Antwortsignal der Frequenz F3 zu empfangen;
- einen Betriebskommunikationskanal, der es dem mindestens einen RFID-Terminal (100) ermöglicht, über eine erste Antenne, die auf eine Betriebsfrequenz F4 abgestimmt ist, sendend, und über eine zweite Antenne, die auf eine Frequenz F4 abgestimmt ist, empfangend mit dem mindestens einen Repeater (200) zu kommunizieren, wobei sich die Frequenz F4 von der Frequenz F1 unterscheidet.

9. Ortungssystem nach einem der zwei vorstehenden Ansprüche, wobei der Referenzsignalgenerator des mindestens einen RFID-Terminals (100) einen lokalen Referenzoszillator umfasst, und wobei der lokale Referenzoszillator des mindestens einen RFID-Terminals (100) temperaturkompensiert ist.

10. Ortungssystem nach einem der drei vorstehenden Ansprüche, wobei das mindestens eine RFID-Terminal (100) ein System zum Messen des Frequenzversatzes zwischen dem Abfragesignal der Frequenz F0 und dem von dem mindestens einen RFID-Transponder (300) rückgestreuten Antwortsignal der Frequenz F3 umfasst.

11. Ortungssystem nach einem der vorstehenden Ansprüche, wobei das wiederholte Abfragesignal der Frequenz F2, das von dem mindestens einen Repeater (200) gesendet und von dem mindestens einen RFID-Transponder (300) empfangen wird, dem RFID-Transponder (300) ausreichend Energie bereitstellt, damit dieser letztere das rückgestreute Antwortsignal der Frequenz F3 sendet.

12. Repeater (200) für ein System zum Orten von RFID-Transpondern (300), wobei das System mindestens einen RFID-Transponder (300) und mindestens ein RFID-Terminal (100) umfasst, das dafür konfiguriert ist, ein Abfragesignal auf einer Frequenz F1 zu senden, wobei der mindestens eine RFID-Transponder (300) in einem Abfrageraum geortet wird, der vom Repeater (200) abgedeckt wird, wobei der Repeater (200) dafür konfiguriert ist:
- das von dem mindestens einen RFID-Terminal (100) gesendete Abfragesignal auf der Frequenz F1 zu empfangen;
- das Abfragesignal der Frequenz F1 auf einer Frequenz F2 zu wiederholen, welche sich von F1 unterscheidet, wobei das wiederholte Abfragesignal der Frequenz F2 dazu bestimmt ist, von dem mindestens einen RFID-Transponder (300) empfangen zu werden;
**dadurch gekennzeichnet, dass**, um das Abfragesignal der Frequenz F1 auf einer Frequenz F2 zu wiederholen, der mindestens eine Repeater (200) dafür konfiguriert ist, eine rein analoge Frequenzumsetzung aus der Frequenz F1 in die Frequenz F2 durchzuführen, wobei der mindestens eine Repeater (200) einen Referenzsignalgenerator umfasst, und wobei die rein analoge Frequenzumsetzung ein Mischen des Abfragesignals der Frequenz F1 mit einem vom Referenzsignalgenerator auf einer Frequenz F1-F2 und/oder F1+F2 erzeugten Referenzsignal umfasst, und dadurch, dass der Repeater (200) mindestens zwei Sendeantennen umfasst, die dafür konfiguriert sind, das wiederholte Abfragesignal der Frequenz F2 an den mindestens einen RFID-Transponder (300) zu senden, und dadurch, dass die Strahlung der mindestens zwei Antennen zum Abfragen auf der Frequenz F2 von dem mindestens einen RFID-Terminal (100) über die Ansteuerdaten gesteuert wird, was ein Orten mindestens eines RFID-Transponders (300) durch Abtasten des Abfrageraums, der sich um den Repeater (200) herum befindet, ermöglicht.

13. Repeater (200) nach dem vorstehenden Anspruch, wobei der Repeater (200) mindestens einen zusätzlichen RFID-Transponder und mindestens eine zusätzliche Antenne umfasst, die auf eine Betriebsfrequenz F4 abgestimmt ist, wobei der zusätzliche RFID-Transponder und die zusätzliche Antenne dafür konfiguriert sind, Ansteuerdaten auf einer Frequenz F4 zu empfangen, die von dem mindestens einen RFID-Terminal (100) gesendet werden, um ein Ansteuern des mindestens einen Repeaters (200) durch das mindestens eine RFID-Terminal (100) zu ermöglichen, wobei sich die Frequenz F4 von der Frequenz F1 unterscheidet, und wobei die Ansteuerdaten mindestens eine Anweisung umfassen, ausgewählt aus: Aktivieren des Repeaters (200), Deaktivieren des Repeaters (200), Überprüfen des Ladestands und von Zyklen mindestens einer Stromversorgungsquelle des Repeaters (200), Steuerung der Frequenz des wiederholten Abfragesignals der Frequenz F2, Steuerung der Sendeleistung des wiederholten Abfragesignals der Frequenz F2, Steuerung einer Verstärkung eines Empfängers des Abfragesignals der Frequenz F1.

14. Repeater (200) nach einem der zwei vorstehenden Ansprüche, der über N>1 Abfragekanäle verfügt, die dafür konfiguriert sind, das wiederholte Abfragesignal der Frequenz F2 zu übertragen, wobei jeder Kanal eine gesonderte Antenne umfasst, wobei jede Antenne dafür konfiguriert ist, ein wiederholtes Abfragesignal auf der Frequenz F2 zu senden.

15. Repeater (200) nach dem vorstehenden Anspruch, wobei der zugehörige zusätzliche RFID-Transponder dafür konfiguriert ist, Anweisungen zu empfangen, die in den Ansteuerdaten des RFID-Terminals (100) enthalten sind, und der Repeater (200) dafür konfiguriert ist, mindestens eine Aktion durchzuführen, die von der Anweisung abhängig ist, wobei die Anweisung das Aktivieren eines Abfragekanals auf der Frequenz F2 aus den N verfügbaren Kanälen des Repeaters (200) ist.

## Claims

1. System for localising RFID transponders (300) comprising a system for electromagnetically querying RFID transponders (300), comprising at least one RFID terminal (100) comprising at least one RFID reader (110), the at least one RFID terminal (100) is configured to emit a querying signal at a frequency F1, **characterised in that** the system comprises at least one so-called repeater RFID device (200), **in that** the at least one repeater (200) is configured to repeat at a frequency F2 different from F1, said querying signal of frequency F1, said repeated querying signal of frequency F2 being intended to be received by the at least one RFID transponder (300), **in that** the at least one RFID transponder (300) is configured to emit a back-scattered response signal at a frequency F3 in response to the receiving of said repeated querying signal and **characterised in that** in order to repeat at a frequency F2 said querying signal of frequency F1 the at least one repeater (200) is configured to achieve an only analogue frequency transposition from the frequency F1 to the frequency F2, the at least one repeater (200) comprising a reference signal generator and the only analogue frequency transposition comprising a mixture of said querying signal of frequency F1 with a reference signal generated by said reference signal generator at a frequency F1-F2 and/or F1+F2 so as to provide said repeated querying signal of frequency F2, the at least one RFID transponder (300) being localised in a querying space covered by the repeater (200), and **in that** the repeater (200) comprises at least two querying antennas at the frequency F2, of which the radiation is controlled by the at least one RFID terminal (100) making it possible for a localisation, by scanning the querying space, of the at least one RFID transponder (300).

2. Localisation system according to the preceding claim, wherein the repeater (200) comprises at least one additional RFID transponder and at least one additional antenna adapted to a service frequency F4, wherein the additional RFID transponder and the additional antenna are configured to establish a service communication channel of frequency F4 between the repeater (200) and the RFID terminal (100) so as to make it possible for a controlling of the repeater (200) by the RFID terminal (100), the frequency F4 being different from the frequency F1, and wherein the control data comprise at least one instruction taken from among: activation of the repeater (200), inactivation of the repeater (200), verification of the charge level and of cycles of at least one source for electrically supplying the repeater (200), controlling the frequency of the repeated querying signal of frequency F2, controlling a power for emitting the repeated querying signal of frequency F2, controlling an increase of a receiver of the querying signal of frequency F1, and wherein the radiation of said at least two querying antennas at the frequency F2 is controlled, by the at least one RFID terminal via the service communication channel of frequency F4, making it possible for a localisation by scanning the querying space of the at least one RFID transponder.

3. Localisation system according to the preceding claim, wherein the at least one repeater (200) comprises at least the following elements:
- A receiving antenna configured to receive said querying signal of frequency F1 emitted by the at least one RFID terminal (100);
- At least one emitting antenna configured to emit the repeated querying signal of frequency F2 to the at least one RFID transponder (300);
- Said reference signal generator at the frequency F1-F2 and/or F1+F2;
- An analogue mixer of said received querying signal of frequency F1 with said reference signal of frequency F1-F2 and/or F1+F2 configured to carry out said mixture and to deliver at the output, said repeated querying signal of frequency F2;
- A Control Unit managing said control data received from the at least one RFID terminal (100) via said service communication channel at the frequency F4;
- The additional RFID transponder configured to receive and emit service signals at the frequency F4.
- The additional antenna configured to emit and receive service signals at the frequency F4.

4. Localisation system according to any one of the preceding claims, wherein the reference signal generator of the at least one repeater (200) comprises a local reference oscillator, of which the frequency is equal to F1-F2 and/or F1+F2 so as to provide said repeated querying signal of frequency F2.

5. Localisation system according to any one of the preceding claims, wherein the at least one RFID reader (110) of the at least one RFID terminal (100) is configured to emit querying signals of frequency F0 and wherein the at least one RFID terminal (100) comprises at least one additional RFID device (120), connected to the at least one RFID reader (110) and configured to transpose the querying signals of frequency F0 emitted by the at least one RFID reader (110) into the querying signals of frequency F1 intended to be received by the at least one repeater (200).

6. Localisation system according to the preceding claim, wherein the at least one additional RFID device (120) is configured to carry out an only analogue transposition of the querying signals of frequency F0 into the querying signals of frequency F1.

7. Localisation system according to the preceding claim, wherein said RFID reader (110) is a monostatic Gen2 UHF RFID reader, and wherein the at least one RFID terminal (100) comprises the following elements:
- A circulator making it possible to isolate the back-scattered response signal by the at least one RFID transponder (300);
- A reference signal generator at the frequency F1-F0 and/or F1+F0 which mixed with the querying signal at the frequency F0, produces a querying signal of frequency F1;
- An analogue mixer of the querying signal of frequency F0 with the reference signal of frequency F1-F0 and/or F1+F0;
- An antenna configured to transmit the querying signal of frequency F1 to the at least one repeater (200);
- An antenna configured to receive the response signal of frequency F3 coming from the at least one RFID transponder (300);
- A service communication channel making it possible for the at least one RFID terminal (100) to communicate by emitting and by receiving with the at least one repeater (200) via an antenna adapted to a service frequency F4, the frequency F4 being different from the frequency F1.

8. Localisation system according to any one of claims 5 and 7, wherein said RFID reader (110) is a bistatic Gen2 UHF RFID reader, and wherein the at least one RFID terminal (100) comprises the following elements:
- A reference signal generator at the frequency F1-F0 and/or F1+F0 which mixed with the querying signal at the frequency F0, produces a querying signal of frequency F1;
- An analogue mixer of the querying signal of frequency F0 with the reference signal of frequency F1-F0 and/or F1+F0;
- An antenna configured to transmit the querying signal of frequency F1 to the at least one repeater (200);
- An antenna configured to receive the response signal of frequency F3 coming from the at least one RFID transponder (300);
- A service communication channel making it possible for the at least one RFID terminal (100) to communicate with the at least one repeater (200) by emitting via an antenna adapted to a service frequency F4, and by receiving via a second antenna adapted to a frequency F4, the frequency F4 being different from the frequency F1.

9. Localisation system according to any one of the two preceding claims,
wherein said reference signal generator of the at least one RFID terminal (100) comprises a local reference oscillator, and wherein said local reference oscillator of the at least one RFID terminal (100) comprises a local reference oscillator and wherein said local reference oscillator of the at least one RFID terminal (100) is compensated for in temperature.

10. Localisation system according to any one of the three preceding claims,
wherein the at least one RFID terminal (100) comprises a system for measuring the difference in frequency between the querying signal of frequency F0 and the back-scattered response signal of frequency F3 by the at least one RFID transponder (300).

11. Localisation system according to any one of the preceding claims, wherein said repeated querying signal of frequency F2 emitted by the at least one repeater (200) and received by the at least one RFID transponder (300) provides sufficient energy to said RFID transponder (300) such that the latter emits said back-scattered response signal of frequency F3.

12. Repeater (200) for RFID transponder (300) localisation system, the system comprising at least one RFID transponder (300) and at least one RFID terminal (100) configured to emit a querying signal at a frequency F1, the at least one RFID transponder (300) being localised in a querying space covered by the repeater (200), the repeater (200) being configured to:
- receive the querying signal at the frequency F1 emitted by the at least one RFID terminal (100);
- repeat at a frequency F2 different from F1, said querying signal of frequency F1, said repeated querying signal of frequency F2 being intended to be received by the at least one RFID transponder (300);
**characterised in that** in order to repeat at a frequency F2, said querying signal of frequency F1, the at least one repeater (200) is configured to carry out an only analogue frequency transposition from the frequency F1 to the frequency F2, the at least one repeater (200) comprising a reference signal generator and the only analogue frequency transposition comprising a mixture of said querying signal of frequency F1 with a reference signal generated by said reference signal generator at a frequency F1-F2 and/or F1+F2, and **in that** the repeater (200) comprises at least two emission antennas configured to emit the repeated querying signal of frequency F2 to the at least one RFID transponder (300), and **in that** the radiation of said at least two querying antennas at the frequency F2 is controlled, by the at least one RFID terminal (100) via the control data, making it possible for a localisation, by scanning the querying space situated around the repeater (200), of at least one RFID transponder (300).

13. Repeater (200) according to the preceding claim, wherein the repeater (200) comprises at least one additional RFID transponder and at least one additional antenna adapted to a service frequency F4, wherein the additional RFID transponder and the additional antenna are configured to receive control data at a frequency F4, emitted by the at least one RFID terminal (100) so as to make it possible for a controlling of the at least one repeater (200) by the at least one RFID terminal (100), the frequency F4 being different from the frequency F1, and wherein the control data comprises at least one instruction taken from among: activation of the repeater (200), inactivation of the repeater (200), verification of the charge level and cycles of at least one source for electrically supplying the repeater (200), controlling the frequency of the repeated querying signal of frequency F2, controlling the power for emitting the repeated querying signal of frequency F2, controlling an increase of a receiver of the querying signal of frequency F1.

14. Repeater (200) according to any one of the two preceding claims, having N>1 querying channels configured to transmit the repeated querying signal of frequency F2, each channel comprising a separate antenna, each antenna being configured to emit a repeated querying signal at the frequency F2.

15. Repeater (200) according to the preceding claim, wherein said associated additional RFID transponder is configured to receive instructions contained in data for controlling the RFID terminal (100) and the repeater (200) is configured to carry out at least one action according to said instruction, said instruction being the activation of a querying channel at the frequency F2 from among N channels available of the repeater (200).
